# EUROPÄISCHE PATENTSCHRIFT

(11) **EP 3 423 747 B1**
(45) Veröffentlichungstag und Bekanntmachung des Hinweises auf die Patenterteilung: **01.01.2020**
(21) Anmeldenummer: 17711065.7
(22) Anmeldetag: 22.02.2017
(51) Int. Cl.: F21S 41/39, F21S 41/675, F21S 45/47

(54) **BAUTEILGEHÄUSE EINES FAHRZEUGSCHEINWERFERS**
COMPONENT HOUSING OF A VEHICLE HEADLIGHT
BOÎTIER DE COMPOSANT D'UN PHARE DE VÉHICULE

(30) Priorität: 03.03.2016 AT 501692016
(43) Veröffentlichungstag der Anmeldung: 09.01.2019
(73) Patentinhaber: ZKW Group GmbH, 3250 Wieselburg (AT)
(72) Erfinder: MAYER, Matthias, 3240 Mank (AT); REINPRECHT, Markus, 3384 Pielachhäuser (AT); MITTERLEHNER, Stefan, 3240 Mank (AT)
(74) Vertreter: Patentanwaltskanzlei Matschnig & Forsthuber OG
(86) Internationale Anmeldenummer: PCT/AT2017/060041
(87) Internationale Veröffentlichungsnummer: WO 2017/147632

(56) Entgegenhaltungen:
- WO-A1-2015/122481
- US-A1- 2002 109 903
- US-A1- 2015 234 177

## Beschreibung

Die Erfindung betrifft einen Fahrzeugscheinwerfer, umfassend zumindest eine Lichtquelle, zumindest eine Projektionsoptik, ein elektronisches Bauteil mit einer optischen Wirkfläche an einer Vorderseite und einer thermischen Wirkfläche sowie elektrischen Kontakten auf einer, der Vorderseite abgewandten Rückseite, wobei die Lichtquelle eingerichtet ist, einen Lichtstrahl zu erzeugen, der auf die optische Wirkfläche gerichtet ist und dort in Richtung der zumindest einen Projektionsoptik reflektiert wird und ein Lichtbild vor dem Fahrzeug ausbildet.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell wird das Lichtbild anhand einer Projektion auf eine vertikale Fläche entsprechend der einschlägigen Normen, die sich auf die KFZ-Beleuchtungstechnik beziehen, beschrieben.

Um diesem genannten Bedürfnis zu entsprechen, wurden unter anderem Scheinwerfer entwickelt, in denen eine variabel ansteuerbare Reflektorfläche aus einer Mehrzahl von Mikrospiegeln gebildet ist und eine Lichtemission, die von einer Lichtquelle erzeugt wird, in Abstrahlrichtung des Scheinwerfers reflektiert. Derartige Leuchteinrichtungen sind im Fahrzeugbau wegen ihrer sehr flexiblen Lichtverteilung vorteilhaft, da für unterschiedliche Leuchtbereiche die Beleuchtungsstärke individuell geregelt werden kann und beliebige Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung oder die Abbildung von blendfreiem Fernlicht.

Für die Mikrospiegelanordnung kommt die sogenannte Digital Light Processing (DLP®) Projektionstechnik zur Anwendung, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert.

Basis für diese Technik bildet ein elektronisches Bauteil, das die rechteckige Anordnung in Form einer Matrix von Spiegeln und deren Ansteuerungstechnik enthält und als "Digital Micromirror Device" (DMD) bezeichnet wird.

Bei einem DMD-Mikrosystem handelt es sich um einen Flächenlichtmodulator (Spatial Light Modulator, SLM), der aus matrixförmig angeordneten Mikrospiegelaktoren, das heißt verkippbaren spiegelnden Flächen besteht, beispielsweise mit einer Kantenlänge von etwa 16 µm. Die Spiegelflächen sind derart konstruiert, dass sie durch die Einwirkung elektrostatischer Felder beweglich sind. Jeder Mikrospiegel ist im Winkel einzeln verstellbar und weist in der Regel zwei stabile Endzustände auf, zwischen denen innerhalb einer Sekunde bis zu 5000 mal gewechselt werden kann. Die Anzahl der Spiegel entspricht der Auflösung des projizierten Bilds, wobei ein Spiegel ein oder mehrere Pixel darstellen kann. Mittlerweile sind DMD-Chips mit hohen Auflösungen im Megapixel-Bereich erhältlich. Den verstellbaren Einzelspiegeln zugrunde liegende Technologie ist die Micro-Electro-Mechanical-Systems-(MEMS) Technologie.

Während die DMD-Technologie zwei stabile Spiegel-Zustände aufweist, und durch Modulation zwischen beiden stabilen Zuständen der Reflexionsfaktor eingestellt werden kann, weist die "Analog Micromirror Device" (AMD) Technologie die Eigenschaft auf, dass die Einzelspiegel in variablen Spiegelpositionen eingestellt werden können, die dort jeweils in einem stabilen Zustand sind

Ein typisches Mikrospiegel-Bauteil umfasst ein Gehäuse, auf dessen Vorderseite, hinter einem optischen Sichtfenster, die Matrix von Spiegeln angeordnet ist. Unter der optischen Wirkfläche eines solchen Mikrospiegel-Bauteils wird die aktive Spiegelfläche des Bauteils verstanden, das heißt die Gesamtfläche, die durch alle einzelnen Mikrospiegel gebildet ist. Auf der Rückseite des Gehäuses sind üblicherweise die elektrischen Kontakte rings um eine mittig liegende Fläche angeordnet, die zum Anschluss einer Kühleinrichtung vorgesehen ist. Unter der thermischen Wirkfläche eines solchen Mikrospiegel-Bauteils wird die Fläche auf der Rückseite des Bauteils verstanden, die zur Anbringung eines Kühlkörpers vorgesehen ist.

Oft wird das Mikrospiegel-Bauteil in einem sogenannten CLGA- ("Ceramic Land Grid Array") Modul eingebaut, einem Verbindungssystem für integrierte Schaltungen. Beim LGA-System werden die Anschlüsse des integrierten Schaltkreises auf seiner Unterseite in Form eines schachbrettartigen Feldes ("grid array") von Kontaktflächen ("land") ausgeführt. LGA-Prozessoren werden üblicherweise auf Sockel gesetzt, die federnd ausgeführte Kontakte enthalten, was eine geringere mechanische Beanspruchung der Kontakte zur Folge hat. Der keramische Körper des CLGA ist insbesondere für hohe Betriebstemperaturen ausgelegt.

Neben den mechanischen Belastungskräften, die während der Montage der einzelnen Komponenten entstehen können, können im Stand oder während der Fahrt des Fahrzeugs mechanische Belastungskräfte wie Vibrationen oder durch Fahrsituationen Zug- oder Druckkräfte entstehen, die auf sämtliche Komponenten im Fahrzeug wirken. Es besteht daher die Forderung, dass die Komponenten einerseits derart gestaltet sind, dass mechanische Belastungskräfte keinen Einfluss auf deren Funktion bzw. deren Anordnung untereinander haben. Andererseits dürfen die Komponenten hinsichtlich Stabilität oder Lebensdauer nicht beeinträchtigt werden, wie beispielsweise durch hohe Temperaturunterschiede hervorgerufene mechanische Belastungskräfte aufgrund unterschiedlicher Materialausdehnungen benachbarter unterschiedlicher Materialien bei und innerhalb der Komponenten. Die WO 2015/122481 A1 offenbart einen Fahrzeugscheinwerfer des Stands der Technik.

Eine Aufgabe der vorliegenden Erfindung liegt darin, ein Bauteilgehäuse für ein elektronisches Bauteil in einem Fahrzeugscheinwerfer zu schaffen, das die optische Grundfunktion des Fahrzeugscheinwerfer durch das eingesetzte elektronische Bauteil unterstützt, sowie dessen stabile, mechanische Befestigung als auch den Anschluss der optischen, elektrischen und thermischen Systemanteile erlaubt. Dabei ist zu berücksichtigen, dass keine mechanischen Belastungskräfte auf die Anschlüsse wirken dürfen. Gleichzeitig soll eine einfache Wartung der Komponenten ermöglicht werden.

Diese Aufgabe wird mit einem Fahrzeugscheinwerfer der eingangs genannten Art gelöst, der ein Bauteilgehäuse, welches aus einer Gehäuseschale und einem Gehäusedeckel gebildet ist, eine erste Leiterplatte und zumindest einen ersten Abstandshalter beinhaltet, und das Bauteilgehäuse zumindest teilweise das elektronische Bauteil aufnimmt, wobei:
- die Gehäuseschale eine Montageposition für das elektronische Bauteil, sowie einer im Bereich der Montageposition befindlichen Bauteilöffnung, in der das elektronische Bauteil angeordnet ist und durch die ein Zugang zur optischen Wirkfläche des elektronischen Bauteils möglich ist, umfasst,
- das elektronische Bauteil über dessen elektrischen Kontakte mit der ersten Leiterplatte verbindbar ist,
- die Gehäuseschale mit dem Gehäusedeckel verschließbar ist,
- der zumindest eine erste Abstandshalter zwischen einem zugeordneten Auflagepunkt, und dem Gehäusedeckel angeordnet ist, wobei der Auflagepunkt auf der ersten Leiterplatte oder auf einem Kühlkörper, der auf der ersten Leiterplatte sowie auf der thermischen Wirkfläche des elektronischen Bauteils angeordnet ist, liegt.
Zudem ist zumindest ein Verbindungselement zum Herstellen einer Verbindung zwischen dem Gehäusedeckel und der Gehäuseschale vorgesehen. Das Verbindungselement kann vorzugsweise entlang einer Achse eingesetzt werden, die quer zur Leiterplatte verlaufend angeordnet ist.

Mit dem Zugang zu einer optischen oder thermischen Wirkfläche ist gemeint, dass die jeweilige Wirkfläche durch eine Öffnung entweder in der Gehäuseschale beziehungsweise in der Leiterplatte erreichbar ist oder das elektronische Bauteil mit der Wirkfläche durch die Öffnung hindurch ragen kann, um die Wirkung der Wirkfläche zu ermöglichen. Die optische Wirkfläche erzeugt ihre Wirkung durch Reflexion von Licht, das einfällt und entsprechend der Steuerung durch das elektronische Bauteil wieder reflektiert wird. Durch die Öffnung ist sichergestellt, dass der Weg des einfallenden und reflektierten Licht nicht beeinträchtigt wird. Die thermische Wirkfläche erzeugt ihre Wirkung durch die Abfuhr von Wärme, die im elektronischen Bauteil auftritt. Zur Verbesserung der Wirkung kann zusätzlich ein Kühlkörper auf der thermischen Wirkfläche angebracht sein. Die Wärme wird zum einen durch die Verlustleistung der Elektronik des elektronischen Bauteils, aber auch durch das auf die optische Wirkfläche eingestrahlte und nicht reflektierte, das heißt absorbierte Licht hervorgerufen.

Durch die erfindungsgemäße Lösung wird ein Bauteilgehäuse geschaffen, das einen einfachen Einbau im rauen Umfeld der Montage in einem Fahrzeugscheinwerfer erlaubt, sowie im Betrieb mechanische Belastungen von den empfindlichen elektronischen Komponenten und Schaltungsträgern fernhält und gleichzeitig eine geeignete Schnittstelle der optischen Funktion des elektronischen Bauteils für den Fahrzeugscheinwerfers bereitstellt. Insbesondere wirken während des Gehäuseeinbaus keine Kräfte auf das elektronische Bauteil. Zusätzlich ermöglicht die erfindungsgemäße Anordnung einen leichten Zusammenbau der einzelnen Komponenten und erlaubt die gute Zugänglichkeit zu Wartungszwecken während des Produkt-Lebenszyklus. Nur die Halterung, in der auch die Abbildungsoptik eingebaut ist, weist eine starre Verbindung zum elektronischen Bauteil auf, um das elektronische Bauteil präzise im Brennpunkt der Abbildungsoptik zu halten. Das Bauteilgehäuse der Erfindung ergibt eine robuste Einheit, in der mechanische Belastungskräfte abgeleitet werden, sowohl im Zusammenbau als auch im Betrieb.

Durch die genannte Bauteilöffnung wird der Zugang zur optischen Wirkfläche des elektronischen Bauteils ermöglicht, d.h. die Matrix von Spiegeln im Bauteil wird für die weiteren Komponenten der Beleuchtungseinrichtung sichtbar und das von einer Lichtquelle eingestrahlte Licht kann störungsfrei über die optische Wirkfläche reflektiert werden.

In einer vorteilhaften Weiterbildung kann die erste Leiterplatte eine Kühlkörperöffnung umfassen, durch welche ein Zugang zur thermischen Wirkfläche des elektronischen Bauteils möglich ist und eine verbesserte Kühlung des elektronischen Bauteils erzielt wird. Besonders günstig ist es, wenn das Bauteilgehäuse einen Kühlkörper umfasst, der auf der thermischen Wirkfläche des elektronischen Bauteils angeordnet ist.

Analog gilt auch für die genannte Kühlkörperöffnung, dass sie Zugang zur thermischen Wirkfläche des elektronischen Bauteils ermöglicht, um dort einen Kühlkörper anzubringen. Folglich kann die Leiterplatte eine Öffnung umfassen, durch die der Kühlkörper durchgesteckt werden kann.

Es ist vorteilhaft, wenn Auflagepunkte auf der ersten Leiterplatte oder auf dem Kühlkörper liegen, um so bei Verwendung eines Kühlkörpers den Kühlkörper mit der Leiterplatte zu fixieren.

In einer vorteilhaften Ausführungsform kann vorgesehen sein, dass zumindest der erste Abstandshalter federnd ausgeführt ist und vorzugsweise eine im Wesentlichen hohlzylindrische Form sowie eine Achse aufweist, wobei das Verbindungselement vorzugsweise durch die hohlzylindrische Form verläuft und vorzugsweise die Achse des Verbindungselements mit der Achse des ersten Abstandshalters zusammenfällt.

Wenn der erste Abstandshalter federnd ausgeführt ist, wird eine gemäß der Aufgabestellung besonders geeignete Befestigung bzgl. mechanischer Belastungen auf die Leiterplatte bzw. den Kühlkörper erreicht. Insbesondere Maßtoleranzen der verwendeten Komponenten können mechanische Belastungen wie beispielsweise Biegespannungen im Zusammenbau hervorrufen. Die federnd ausgeführten Elemente sorgen für gleichmäßige Anpresskräfte beim Zusammenbau des Bauteilgehäuses und der Komponenten bzw. für deren verzugsspannungsarme Fixierung.

In einem weiteren Aspekt der Erfindung können zwischen der ersten Leiterplatte und dem Gehäusedeckel zumindest eine zweite Leiterplatte sowie zumindest ein Adapter angeordnet sein, wobei der Adapter vorzugsweise eine flexible Leiterplatte umfasst und die Leiterplatten verbindet. Dadurch können komplexe elektronische Schaltkreise auf der ersten und zweiten Leiterplatte untergebracht werden. Manche elektronischen Bauteile erfordern umfangreiche elektronische Schaltungen für Ansteuerung bzw. Sensorauswertung, was oft eine entsprechende Größe der Leiterplatte mit sich bringt. Um die Baugröße trotzdem kompakt zu halten, können "huckepack" zwei oder mehrere Leiterplatten übereinander angeordnet werden.

Günstig ist es, wenn die zweite Leiterplatte sowohl elektrisch also auch mechanisch mit der ersten Leiterplatte verbunden ist und die zweite Leiterplatte Öffnungen umfasst, durch die die ersten Abstandshalter hindurch ragen können. Die mechanische Verbindung der beiden Leiterplatten bedeutet eine gleichzeitige Beweglichkeit beider Leiterplatten, die durch den ersten federnden Abstandshalter ermöglicht wird.

Um eine einfachere Montage des elektronischen Bauteils zu erreichen, kann es außerdem günstig sein, wenn zwischen der ersten Leiterplatte und dem elektronischem Bauteil ein Montagesockel angeordnet ist, wodurch die elektrischen Kontakte des elektronischen Bauteils mit beispielsweise Kontaktanschlussflächen auf der ersten Leiterplatte verbunden sind. Dies ist deshalb besonders günstig, um das elektronischen Bauteil mit weiteren Komponenten des optischen Systems des Fahrzeugscheinwerfers justierbar zu halten. Die Justierung zu anderen optischen Systemanteilen ist vorteilhaft, um beispielsweise das elektronische Bauteil exakt im Brennpunkt der Abbildungsoptik zu positionieren.

Gemäß einem zusätzlichen Aspekt der Erfindung, der die Kompaktheit sowie die mechanische Stabilität, aber insbesondere die Einfachheit des Bauteilgehäuses samt der umfassten Komponenten unterstützt, kann zumindest ein zweiter Abstandshalter zwischen dem Gehäusedeckel und dem ersten Abstandshalter eingefügt sein. Der zweite Abstandshalter kann vorzugsweise ein gemeinsames Bauteil mit dem Gehäusedeckel bilden und vorzugsweise eine im Wesentlichen hohlzylindrische Form sowie eine Achse aufweisen, wobei das Verbindungselement vorzugsweise durch die hohlzylindrische Form verläuft und vorzugsweise die Achse des Verbindungselements mit der Achse des zweiten Abstandshalters zusammenfällt.

Günstig ist es, wenn die zweite Leiterplatte Öffnungen umfasst, durch die die zweiten Abstandshalter hindurch ragen können.

Des Weiteren ist es für die Kompaktheit und Stabilität des Bauteilgehäuses zusätzlich vorteilhaft, wenn zumindest ein dritter Abstandshalter zwischen der Gehäuseschale und der ersten Leiterplatte angeordnet ist. Der dritte Abstandshalter kann vorzugsweise ein gemeinsames Bauteil mit der Gehäuseschale bilden und vorzugsweise eine im Wesentlichen hohlzylindrische Form sowie eine Achse aufweisen, wobei das Verbindungselement vorzugsweise durch die hohlzylindrische Form verläuft und vorzugsweise die Achse des Verbindungselements mit der Achse des dritten Abstandshalters zusammenfällt.

Zusätzlich sorgt der dritte Abstandshalter dafür, dass die erste Leiterplatte von der Gehäuseschale in einem Abstand gehalten wird. Dies ist insbesondere vor dem Zusammenbau des Bauteilgehäuses relevant, da im montierten Zustand, das heißt wenn die Halterung mit dem Bauteilgehäuse verbunden ist, die Halterung das elektronische Bauteil in das Bauteilgehäuse hineindrückt ist, wobei die Federkraft des ersten Abstandshalters die Anordnung in Spannung hält. Vor der Montage des Bauteilgehäuses auf der Halterung könnte ohne den dritten Abstandshalter die erste Leiterplatte auf die Gehäuseschale gedrückt werden und elektrische Kurzschlüsse auf Schaltkreisen, die sich auf der ersten Leiterplatte befinden, könnten hervorrufen werden. Der dritte Abstandshalter verhindert derartige Kurzschlüsse durch die Gehäuseschale, indem ein isolierender Abstand zwischen der ersten Leiterplatte und der Gehäuseschale gebildet ist. Dieser Schutz vor Kurzschlüssen ist lediglich für Prüfzwecke nach dem Zusammenbau des Bauteilgehäuses relevant und hat im montierten Zustand des Bauteilgehäuses keine weitere Funktion. Sind derartige Prüfzwecke nicht vorgesehen, kann auf den dritten Abstandshalter verzichtet werden.

Die Kompaktheit und Stabilität des Bauteilgehäuses kann weiter verbessert werden, indem zumindest ein vierter Abstandshalter zwischen dem Kühlkörper und der ersten Leiterplatte angeordnet ist. Der vierte Abstandshalter kann vorzugsweise federnd ausgeführt sein und vorzugsweise eine im Wesentlichen hohlzylindrische Form sowie eine Achse aufweisen, wobei das Verbindungselement vorzugsweise durch die hohlzylindrische Form verläuft und vorzugsweise die Achse des Verbindungselements mit der Achse des vierten Abstandshalters zusammenfällt.

Besonders günstig für die Kompaktheit und Stabilität, aber insbesondere für die Einfachheit des Bauteilgehäuses erweist es sich zusätzlich, wenn zumindest ein fünfter Abstandshalter zwischen einem zweiten Abstandshalter und der Gehäuseschale angeordnet ist. Der erste Abstandshalter kann vorzugsweise auf der Außenfläche des fünften Abstandshalters angeordnet sein und der fünfte Abstandshalter vorzugsweise ein gemeinsames Bauteil mit dem Gehäusedeckel bilden und vorzugsweise eine im Wesentlichen hohlzylindrische Form sowie eine Achse aufweisen, wobei das Verbindungselement vorzugsweise durch die hohlzylindrische Form verläuft und vorzugsweise die Achse des Verbindungselements mit der Achse des fünften Abstandshalters zusammenfällt.

Günstig ist es, wenn die zweite Leiterplatte Öffnungen umfasst, durch die die fünften Abstandshalter hindurch ragen können. Die Kompaktheit und Stabilität, aber insbesondere die Einfachheit des Bauteilgehäuses kann zusätzlich unterstützt werden, wenn zumindest ein sechster Abstandshalter zwischen dem Gehäusedeckel und zweiter Leiterplatte angeordnet ist. Der sechste Abstandshalter kann vorzugsweise ein gemeinsames Bauteil mit dem Gehäusedeckel bilden und vorzugsweise eine im Wesentlichen hohlzylindrische Form sowie eine Achse aufweisen, wobei das Verbindungselement vorzugsweise durch die hohlzylindrische Form verläuft und vorzugsweise die Achse des Verbindungselements mit der Achse des sechsten Abstandshalters zusammenfällt. Der sechste Abstandshalter kann die Leiterplatten beispielsweise vor Kurzschluss bei direktem Kontakt zum Bauteilgehäuse schützen, falls dieses aus einem elektrisch leitenden Material besteht.

Alle oben genannten Abstandshalter, die ein gemeinsames Bauteil mit dem Gehäusedeckel oder der Gehäuseschale bilden, können vorzugsweise aus demselben Material ausgeführt sein, wie der Gehäusedeckel oder die Gehäuseschale selbst. Wird ein elektrisch leitfähiges Material zu deren Herstellung eingesetzt, so ist darauf zu achten, dass diejenigen Stellen auf den Leiterplatten, die mit diesen Abstandshaltern in mechanischem Kontakt stehen, diesem Umstand durch eine entsprechende Leitungsführung der elektronischen Schaltungen auf den Leiterplatten Rechnung tragen bzw. eine elektrische Isolation vorgesehen ist.

In einem zusätzlichen Aspekt der Erfindung kann das Bauteilgehäuse besonders einfach zusammenbaubar sein, wenn zumindest ein Verbindungselement eine Schraube, eine Steckverbindung oder eine Klebeverbindung ist, wobei das Verbindungselement vorzugsweise im Wesentlichen zylindrisch ist.

Verbindungselemente können aber je nach Anforderung fest oder lösbar sein, was entsprechende Kostenvorteile in Bauteil-, Montage- oder Wartungskosten mit sich bringt. Für lösbare Verbindungen ist es günstig, wenn Verbindungselemente Schrauben sind. Für feste, besonders kostengünstige Verbindungen ist es wiederum günstig, wenn Verbindungselemente Steckverbindungen sind. Neben geklebten Verbindungen, die zusätzliche Vorteile insbesondere hinsichtlich Stabilität aufweisen, sind ebenso kostengünstige Nieten möglich. Für eine einfache Konstruktion der einzelnen Komponenten ist es hilfreich, wenn zumindest ein Verbindungselement im Wesentlichen zylindrisch ist. Beispielsweise sind das Schrauben, auch wenn sie spitz zulaufend ausgeführt sind. Es können auch Gewinderillen, Führungsrillen oder ähnliches auf den Verbindungselementen vorhanden sein, welche durchgängig oder auch nur teilweise längs der gesamten Oberflächen der Verbindungselemente ausgeführt sind. Eine Variation der Durchmesser längs der Verbindungselemente kann vorteilhaft sein, insbesondere um einen leichten Zusammenbau zu unterstützen, da unter anderem erst die Oberfläche der Abstandshalter für einen mechanischen Zusammenhalt im zusammengebauten Zustand sorgt. Bei Verwendung mehrerer Verbindungselemente ist eine unterschiedliche Gestaltung der einzelnen Verbindungselemente möglich. Ebenso ist es möglich, dass einzelne Verbindungselemente durch alle Abstandshalter, aber andere Verbindungselemente nicht durch alle Abstandshalter durchgeführt sind. Daraus können sich verschiedenste Variationen im Zusammenbau ergeben, was je nach Komplexität und Anzahl der Komponenten innerhalb eines Bauteilgehäuses eine besonders günstige und kompakte gesamte Anordnung ergibt. Eine besonders günstige Anordnung kann gegeben sein, wenn drei Verbindungselemente bzw. Abstandshalter eine oder mehrere Leiterplatten im Bauteilgehäuse fixieren, da dadurch eine mechanisch spannungsfreie Befestigung der Leiterplatten im Bauteilgehäuse erreicht ist, was sich positiv auf die Lebensdauer der Komponenten auf den Leiterplatten und die Leiterplatten selbst auswirkt. Für mechanisch besonders stabile Anordnungen können mehr als drei Verbindungselemente bzw. Abstandshalter eingesetzt werden, was insbesondere dann günstig ist, wenn die verwendeten Komponenten, beispielsweise auf der Leiterplatte oder der Kühlkörper eine große Masse aufweisen. In diesem Fall ist es günstig, wenn an geeigneten Stellen federnd ausgeführte Abstandshalter eingesetzt werden, um mechanische Spannungen in den Leiterplatten zu reduzieren. Geeignete Stellen sind beispielsweise Positionen, an denen oder in deren Nähe große Massen befestigt sind. Bei Einsatz von mehr als drei Verbindungselementen bzw. Abstandshaltern ist es günstig, wenn die Bauteiltoleranzen von beispielsweise Leiterplatten, Kühlkörperbefestigungen oder Abstandshaltern besonders genau sind, um das Risiko mechanischer Spannungskräfte durch einen ungünstigen, beispielsweise nicht planen, Einbau möglichst klein zu halten. Besonders günstig kann es sein, wenn zumindest vier Verbindungselemente bzw. Abstandshalter eingesetzt werden, insbesondere dann, wenn ein elektronisches Bauteil eingesetzt wird, das über eine im Wesentlichen rechteckige optische Wirkfläche verfügt und eine sehr präzise Ausrichtung mit anderen optischen Systemanteilen, wie beispielsweise Lichtquellen, erfordert, beispielsweise entlang oder parallel einer horizontalen und vertikalen Achse. Durch die Fixierung mittels vier Verbindungselementen bzw. Abstandshaltern, wobei davon jeweils zwei entlang oder parallel der horizontalen und vertikalen Achse angeordnet sind, ist gewährleistet, dass das elektronische Bauteil auf einer Leiterplatte oder in der Montagefassung optimal gegen z.B. Vibrationen oder auch unerwünschte thermische Ausdehnungen gesichert ist, unter anderem des CLGA-Gehäuses des elektronischen Bauteils, was für die optische Funktion der Anordnung wesentlich ist.

Für den einfachen und schnellen Zusammenbau des Bauteilgehäuses und der darin enthaltenen Komponenten ist es vorteilhaft, wenn das Verbindungselement gleichzeitig mehrere Komponenten mechanisch miteinander verbindet. Durch einen solchen kombinierten Zusammenbau entstehen Kostenvorteile, sowie geringere und kompaktere Baugröße oder beispielsweise eine besonders effiziente Kühleinrichtung.

Eine zusätzliche Weiterbildung betrifft die Kühlung des Bauteilgehäuses, wobei es günstig ist, wenn bei Notwendigkeit einer leistungsfähigen Kühlvorrichtung der Kühlkörper in eine Kühlleitung mit einem Einlass und einem Auslass eingefügt ist und von einem Kühlmedium durchströmbar ist, und die Gehäuseschale vorzugsweise eine Einlassöffnung und eine Auslassöffnung aufweist, wobei in der Einlassöffnung der Einlass und in der Auslassöffnung der Auslass der Kühlleitung angeordnet ist.

Es wird dadurch erreicht, dass eine externe Kühleinrichtung besonders einfach mit dem Bauteilgehäuse verbindbar ist. Je nach erforderlicher Kühlleistung kann beispielsweise Luft oder Wasser als Kühlmedium dienen, das mit einem Lüfter oder einer Pumpe durch die Kühlleitung bewegt wird. Um eine Dichtheit der Kühleinrichtung zu erhalten, ist diese oft als üblicherweise metallisches Gussteil gefertigt. Kühleinlass und Kühlauslass können jeweils einen Flansch umfassen, um einen einfachen Anschluss an weitere Komponenten des Kühlsystems zu ermöglichen. Je nach verwendetem Kühlmedium kann zusätzlich die Verwendung von Dichtungen im Flanschbereich nützlich sein.

Um Bewegungen der ersten Leiterplatte bei der Montage des Bauteilgehäuses an eine Halterung zu ermöglichen, kann es vorteilhaft sein, wenn die Einlassöffnung und die Auslassöffnung in der Gehäuseschalte elastisch bewegbar eingebettet sind. Im einfachsten Fall kann dies durch Dichtungen realisiert werden.

Zusätzlich kann ein weiterer Aspekt der Erfindung dafür sorgen, dass der Zusammenbau des Bauteilgehäuses besonders einfach durchführbar ist, indem im Montagebereich auf der Außenseite der Gehäuseschale zumindest ein Abstandsbügel vorhanden ist, der den Zugang zur optischen Wirkfläche des in die Bauteilöffnung eingesetzten elektronischen Bauteils ermöglicht. Durch den Abstandsbügel wird verhindert, dass sich das elektronische Bauteil während dem Zusammenbau nicht vom Montagesockel löst. Dies ist vorteilhaft, da das elektronische Bauteil im Montagesockel mechanisch keine besonders belastbare mechanische Verbindung aufweist und das elektronische Bauteil insbesondere beim Zusammenbau der Einzelteile leicht aus dem Montagesockel herausfallen könnte. Durch die Abstandsbügel wird die Hantierbarkeit während des Zusammenbaus des Bauteilgehäuses und der darin enthaltenen Komponenten deutlich verbessert. Dies kann wichtig werden, da ein derartiges Bauteilgehäuse üblicherweise von einem Fahrzeugzulieferer gefertigt und zusammengebaut wird, die Endmontage und der Anschluss an die Fahrzeugsysteme bei Fahrzeughersteller erfolgt und eine günstige Hantierbarkeit die Montage insgesamt verbessert.

Der Abstandsbügel kann ergänzend die vorher genannte Funktion des dritten Abstandshalters insofern übernehmen, dass im zusammengebauten, aber noch nicht an der Halterung montierten Bauteilgehäuse die erste Leiterplatte von der Gehäuseschale in einem Abstand gehalten wird. Auf den dritten Abstandshalter kann verzichtet werden. Wenn das elektronische Bauteil am Abstandsbügel aufliegt, kann der Abstandsbügel beim Zusammenbau des Bauteilgehäuses das elektronische Bauteil und folglich die erste Leiterplatte in das Bauteilgehäuse hineindrücken, da die erste Leiterplatte mit dem elektronischen Bauteil fest verbunden ist. Dabei wird die erste Leiterplatte von der Gehäuseschale weggedrückt und in einem Abstand gehalten, wobei die Federkraft des ersten Abstandshalters die Anordnung in Spannung hält. Durch diese Anordnung kann die Wirkung von mechanischen Belastungskräften auf das elektronische Bauteil bei der Montage des Bauteilgehäuses mit der Halterung stark reduziert werden, da diese mechanischen Belastungskräfte durch den ersten, federnden Abstandshalter aufgenommen werden.

Vor der Montage des Gehäuses auf der Halterung kann die erste Leiterplatte auf die Gehäuseschale gedrückt werden, was elektrische Kurzschlüsse auf Schaltkreisen, die sich auf der ersten Leiterplatte befinden, hervorrufen kann. Wie vorher beschrieben, kann der dritte Abstandshalter derartige Kurzschlüsse durch die Gehäuseschale verhindern, indem ein isolierender Abstand zwischen der Gehäuseschale und der ersten Leiterplatte ausgebildet ist. Dieser Schutz vor Kurzschlüssen ist meist nur für Prüfzwecke relevant und hat im montierten Zustand des Gehäuses keine weitere Funktion. Sind derartige Prüfzwecke nicht vorgesehen, kann auf den dritten Abstandshalter verzichtet werden.

Alternativ zum Schutz vor Kurzschlüssen kann ein isolierender Abstand zwischen der Gehäuseschale und der ersten Leiterplatte durch den Abstandsbügel derart gebildet sein, indem der Abstand des Abstandsbügels zur Außenseite der Gehäuseschale auch den Abstand innerhalb des Bauteilgehäuses zwischen der ersten Leiterplatte und der Innenseite der Gehäuseschale im zusammengebauten, aber nicht montierten Zustand, bestimmt. Bei entsprechender Wahl der Abmessungen des Abstandsbügels kann folglich derselbe Effekt erzielt werden, wie ein dritter Abstandshalter, auf den in diesem Fall verzichtet werden kann.

Durch Verwendung eines Analogen oder Digitalen Mikrospiegel-Arrays als elektronisches Bauteil ergibt sich eine besonders vorteilhafte Ausgestaltung der optischen Funktion des Fahrzeugscheinwerfers.

In einer vorteilhaften Ausgestaltung der Erfindung wird ein einfacher Zusammenbau des Bauteilgehäuses mit dem Fahrzeugscheinwerfer dadurch unterstützt, dass dieser ein Gehäusesystem eines Fahrzeugscheinwerfers umfasst. Dieses Gehäusesystem umfasst das Bauteilgehäuse sowie eine Halterung für das Bauteilgehäuse.

Die Montage in einem Fahrzeugscheinwerfer wird in einem weiteren Aspekt der Erfindung erleichtert, indem die Halterung mit der Gehäuseschale zumindest durch das Verbindungselement verbunden und befestigt ist. Dabei wird kein weiteres Bauteil zur Fixierung des Bauteilgehäuses benötigt. Folglich ergibt sich eine günstige Verbindung in mechanischer als auch ökonomischer Hinsicht. Die Gehäuseschale ist mit einer Halterung derart verbunden, dass der Abstandsbügel durch eine Ausnehmung in der Halterung frei liegt.

Die Halterung kann zumindest einen Justierstift zur Ausrichtung mit dem elektronischen Bauteil aufweisen. Das elektronische Bauteil kann zumindest eine korrespondierende Justieröffnung aufweisen. Das kann für eine einfache Justierung der optischen Komponenten des Bauteilgehäuses mit optischen Komponenten des Fahrzeugscheinwerfers bzw. des Gehäusesystems sorgen. Dies ist insbesondere deshalb vorteilhaft, da das elektronische Bauteil möglichst exakt im Brennpunkt einer in der Halterung angeordneten Abbildungslinse liegen soll. Dazu ist es besonders vorteilhaft, wenn die Halterung eine Halterungsöffnung umfasst, durch die Zugang zur optischen Wirkfläche des elektronischen Bauteils möglich ist.

Es ist klar, dass eine geeignete Anzahl von Verbindungselementen, Abstandshaltern und Öffnungen die mechanische Stabilität der Anordnung unterstützt. Je nach Anforderung ist es aber nicht immer nötig, dass alle Verbindungselemente durch alle Abstandshalter oder Öffnungen in den jeweiligen Komponenten verlaufen oder aber zusätzliche Verbindungselemente aus Stabilitätsgründen erforderlich sind. So kann es zweckmäßig sein, dass bei Verwendung eines schweren Kühlkörpers dieser mit zusätzlichen Verbindungselementen beispielsweise auf der Gehäuseschale festgemacht ist, oder andererseits auf manche Abstandshalter aus Kosten- oder Gewichtsgründen verzichtet wird.

Die Erfindung und deren Vorteile werden in Folgenden anhand nicht einschränkender Ausführungsbeispiele näher beschrieben, die in den beiliegenden Zeichnungen veranschaulicht sind. Die Zeichnungen zeigen:
- Fig. 1: eine Ansicht auf eine Chip-Oberseite eines elektronischen Bauteils gemäß einem Ausführungsbeispiel der Erfindung in Form eines DLP-Chips,
- Fig. 2: eine Ansicht auf eine Chip-Unterseite des elektronischen Bauteils,
- Fig. 3: eine perspektivische Ansicht einer Vorderseite eines Ausführungsbeispiel eines Bauteilgehäuses nach der Erfindung,
- Fig. 4: eine perspektivische Ansicht einer Rückseite des Bauteilgehäuses,
- Fig. 5: eine Explosionsdarstellung des Bauteilgehäuses und dessen Komponenten,
- Fig. 6: eine perspektivische Ansicht zweier Leiterplatten nach der Erfindung,
- Fig. 7: eine perspektivische Ansicht der Rückseite der Gehäuseschale mit einer eingesetzten Leiterplatte und federnd ausgeführten Abstandshaltern,
- Fig. 8: eine Explosionsdarstellung des Bauteilgehäuses vor einer Montage mit einer Halterung,
- Fig. 9: eine perspektivische Ansicht des Bauteilgehäuses, das mit der Halterung verbunden ist,
- Fig. 10: eine perspektivische Ansicht eines erfindungsgemäßen Bauteilgehäuses in einem Ausführungsbeispiel mit Kühlung,
- Fig. 11: eine perspektivische Ansicht von hinten auf das Bauteilgehäuse nach Fig. 10,
- Fig. 12: eine Explosionsdarstellung des Bauteilgehäuses und der Komponenten nach Fig. 10,
- Fig. 13: eine perspektivische Ansicht zweier Leiterplatten nach Fig. 10,
- Fig. 14: eine perspektivische Ansicht von hinten auf die Gehäuseschale nach Fig. 10 mit einer eingesetzten Leiterplatte, federnd ausgeführten Abstandshaltern und einem Kühlkörper,
- Fig. 15: eine Ansicht von hinten auf das Bauteilgehäuse für beide Ausführungsformen nach Fig. 3 und Fig. 10, das mit der Halterung verbunden ist, sowie die Lage von Schnittebenen A-A, B-B und C-C,
- Fig. 16: eine Seitenansicht des Bauteilgehäuses nach Fig. 3 in der Schnittebene A-A nach Fig. 15,
- Fig. 17: eine Seitenansicht des Bauteilgehäuses nach Fig. 3 in einem Gehäusesystem in der Schnittebene B-B nach Fig. 15,
- Fig. 18: eine Seitenansicht des Bauteilgehäuses in der Ausführungsform mit Kühlung nach Fig. 10 in der Schnittebene A-A nach Fig. 15,
- Fig. 19: eine Seitenansicht des Bauteilgehäuses nach Fig. 10 in einem Gehäusesystem in der Schnittebene B-B nach Fig. 15,
- Fig. 20: eine Seitenansicht des Bauteilgehäuses nach Fig. 10 in einem Gehäusesystem in der Schnittebene C-C nach Fig. 15,
- Fig. 21: eine Seitenansicht des Bauteilgehäuses nach Fig. 3 in der Schnittebene B-B nach Fig. 15,
- Fig. 22: eine Seitenansicht des Bauteilgehäuses nach Fig. 3 in einem Gehäusesystem in der Schnittebene B-B nach Fig. 15,
- Fig. 23: eine schematische Darstellung eines Fahrzeugscheinwerfers,
- Fig. 24: eine Darstellung der Chip-Oberseite mit einer vergrößerten Darstellung von Mikrospiegeln.

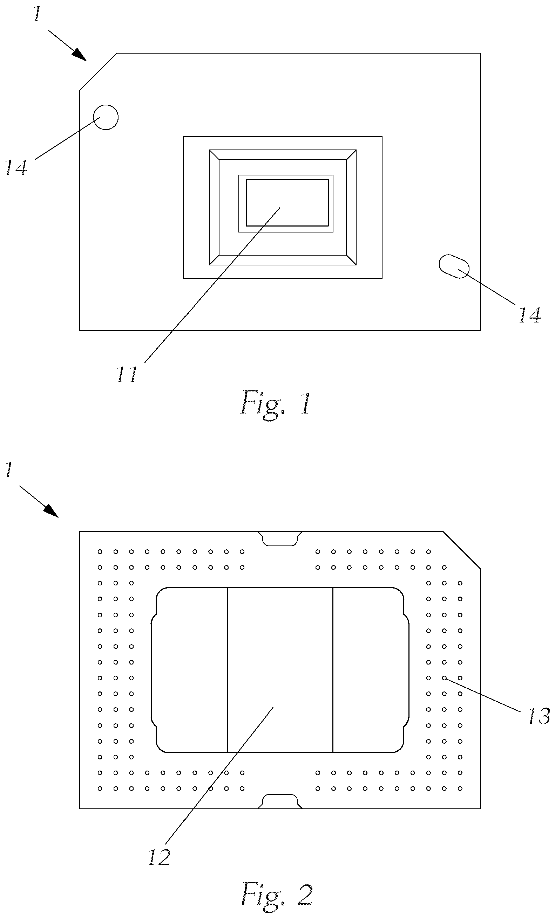

Unter Bezugnahme auf **Fig. 1** bis **Fig. 23** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. In den Figuren ist nur ein stellvertretendes Bezugszeichen für eine jeweilige Komponente eingezeichnet, auch wenn dieselbe Komponente mehrfach ausgeführt ist.

In den Figuren sind die Komponenten eines Bauteilgehäuses 110, 210 eines erfindungsgemäßen Fahrzeugscheinwerfers 300 im Überblick bzw. in verschiedenen Perspektiven und Schnitten dargestellt.

**Fig. 1** und **Fig. 2** zeigen ein elektronisches Bauteil 1 gemäß der Erfindung in Form eines analogen oder digitalen Mikrospiegel-Arrays (DLP-Chip). In Fig. 1 ist das elektronische Bauteil 1 mit seiner Vorderseite erkennbar. Das elektronische Bauteil 1 weist dabei eine optische Wirkfläche 11 (Mikrospiegel-Array) sowie eine Justieröffnung 14 auf. In Fig. 2 ist das elektronische Bauteil 1 mit seiner der Vorderseite abgewandten Rückseite gezeigt, die eine thermische Wirkfläche 12 sowie mit rings angeordneten elektrischen Kontakten 13.

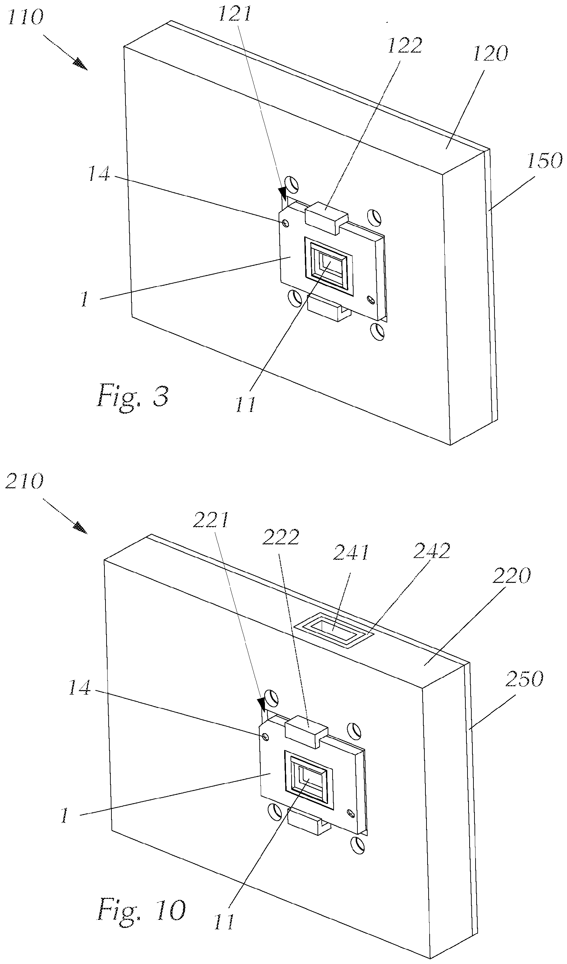

In **Fig. 3** bis **Fig. 9** ist ein erstes Ausführungsbeispiel eines Bauteilgehäuses 110 mit dessen inneren Aufbau ersichtlich, **Fig. 10** bis **Fig. 14** stellen ein weiteres Ausführungsbeispiel eines Bauteilgehäuses 210 mit dessen inneren Aufbau dar, wobei eine Kühlvorrichtung zum Anschluss an eine extern angeordnete Kühleinheit vorsehen ist. Die Bezugszeichen im zweiten Ausführungsbeispiel sind mit "2xx" bezeichnet und entsprechen jenen des ersten Ausführungsbeispiels, die mit "1xx" bezeichnet sind, sofern nicht anders angegeben. Der Einfachheit halber werden in der folgenden Beschreibung zusätzlich zu den Bezugszeichen des ersten Ausführungsbeispiels in Klammern auch die Bezugszeichen des zweiten Ausführungsbeispiels angegeben.

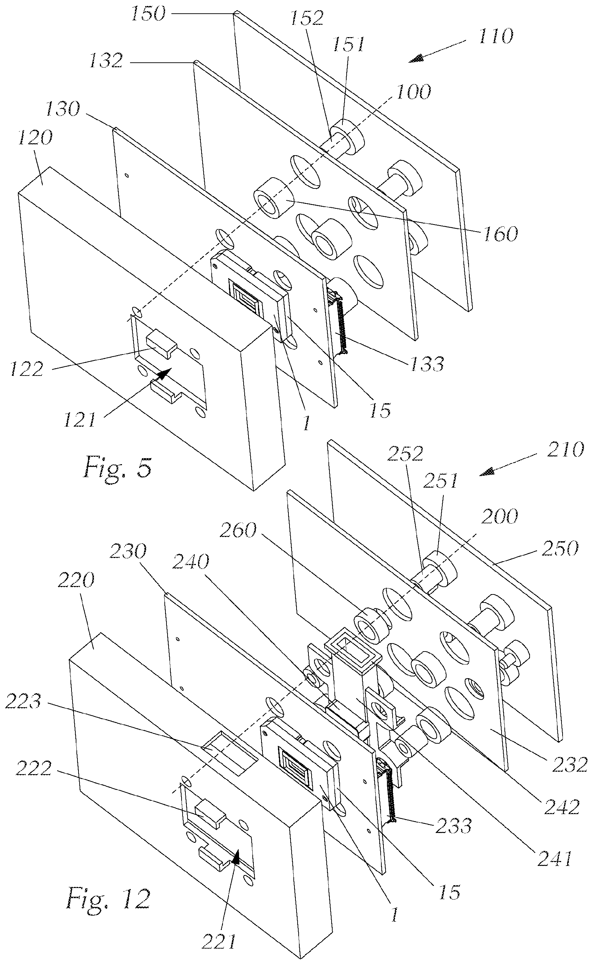

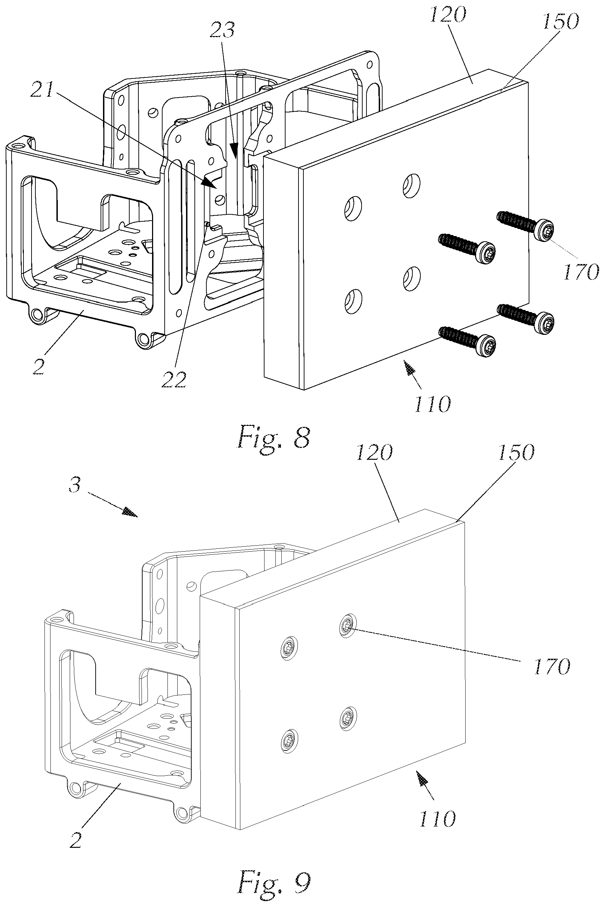

Bezugnehmend auf **Fig. 3** (Fig. 10) umfasst das Bauteilgehäuse 110 (210) eine Gehäuseschale 120 (220) mit einer Montageposition für das elektronische Bauteil 1. Ferner befindet sich im Bereich der Montageposition eine Bauteilöffnung 121 (221), in der das elektronische Bauteil 1 angeordnet ist. Durch die Bauteilöffnung 121 (221) ist ein Zugang zur optischen Wirkfläche 11 des elektronischen Bauteils 1 möglich. Die Gehäuseschale 120 (220) ist mit einem Gehäusedeckel 150 (250) verschließbar. Die Verbindungselemente 170 (270) dienen zum Herstellen von Verbindungen zwischen dem Gehäusedeckel 150 (250) und der Gehäuseschale 120 (siehe Fig. 8). Die Verbindungselemente 170 (270) werden jeweils entlang einer Achse eingesteckt, die jeweils entlang oder parallel einer Linie 100 (200) angeordnet sind (Fig. 5). Zusätzlich sind auf der Gehäuseschale 120 (220) zwei Abstandsbügel 122 (222) angeordnet.

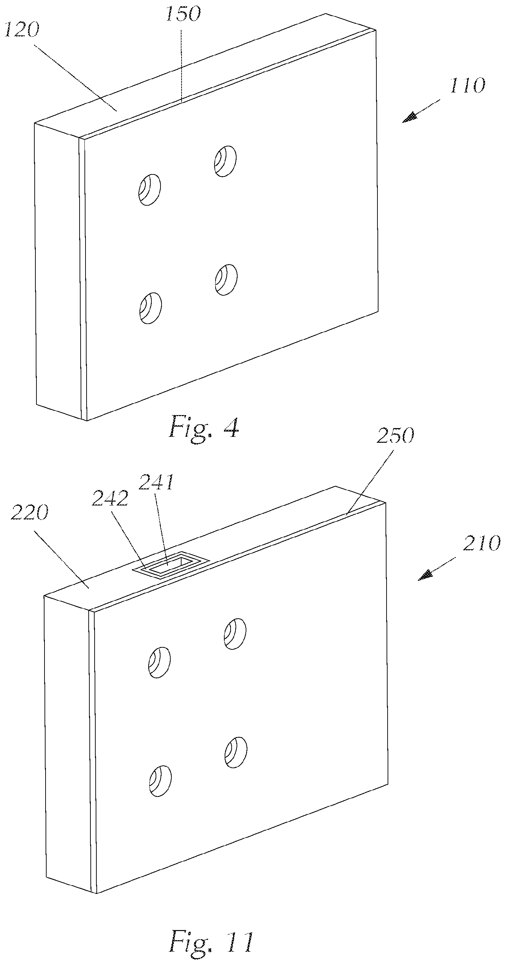

**Fig. 4** (Fig. 11) zeigt das geschlossene Bauteilgehäuse 110 (210), die Gehäuseschale 120 (220) und den Gehäusedeckel 150 (250) in einer perspektivischen Ansicht von hinten. Zusätzlich sind Öffnungen zum Durchführen der Verbindungselemente 170 (270) vorgesehen, um den Gehäusedeckel 150 (250) mit der Gehäuseschale 120 (220) fest zu verbinden (siehe Fig. 8).

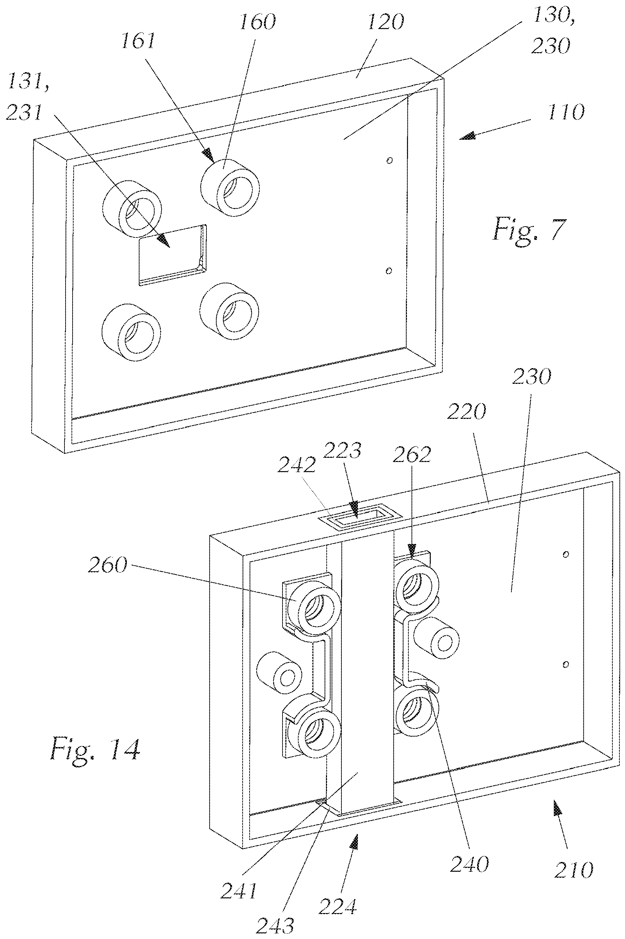

Eine detaillierte Darstellung des inneren Aufbaus des Bauteilgehäuses 110 zeigt eine Explosionsdarstellung in der **Fig. 5** (Fig. 12). Das Bauteilgehäuse 110 (210) umfasst zusätzlich zu den bereits erwähnten Komponenten eine erste Leiterplatte 130 (230), die mit dem elektronischen Bauteil 1 über dessen elektrischen Kontakte 13 und vorzugsweise über einen Montagesockel 15 verbunden ist. Mehrere Auflagepunkte 161 (siehe Fig. 7) liegen auf der ersten Leiterplatte 130 (230). Zumindest erste Abstandshalter 160 (260) sind zwischen den Auflagepunkten 161 und dem Gehäusedeckel 150 (250) angeordnet.

Die ersten Abstandshalter 160 (260) sind federnd ausgeführt und weisen jeweils eine hohlzylindrische Form auf. Die Verbindungselemente 170 (270) verlaufen jeweils durch die hohlzylindrische Form, wobei jeweils die Achse der hohlzylindrischen Form der Verbindungselemente 170 (270) mit der Achse der ersten Abstandshalter 160 (260) zusammenfällt.

Zwischen der ersten Leiterplatte 130 (230) und dem Gehäusedeckel 150 (250) ist eine zweite Leiterplatte 132 (232) angeordnet sowie ein Adapter 133 (233), der auch eine flexible Leiterplatte umfassen kann und der die Leiterplatten 130 (230) und 132 (232) verbindet.

Zwischen der ersten Leiterplatte 130 (230) und dem elektronischem Bauteil 1 ist der Montagesockel 15 angeordnet, wodurch die elektrischen Kontakte 13 des elektronischen Bauteils 1 mit der ersten Leiterplatte 130 (230) verbunden sind.

Zweite Abstandshalter 151 (251) sind zwischen dem Gehäusedeckel 150 (250) und den ersten Abstandshaltern 160 (260) eingefügt, bilden ein gemeinsames Bauteil mit dem Gehäusedeckel 150 (250) und weisen jeweils eine hohlzylindrische Form auf. Die Verbindungselemente 170 (270) verlaufen jeweils durch die hohlzylindrische Form, wobei die Achse der Verbindungselemente 170 (270) mit der Achse der zweiten Abstandshalter 151 (251) zusammenfällt.

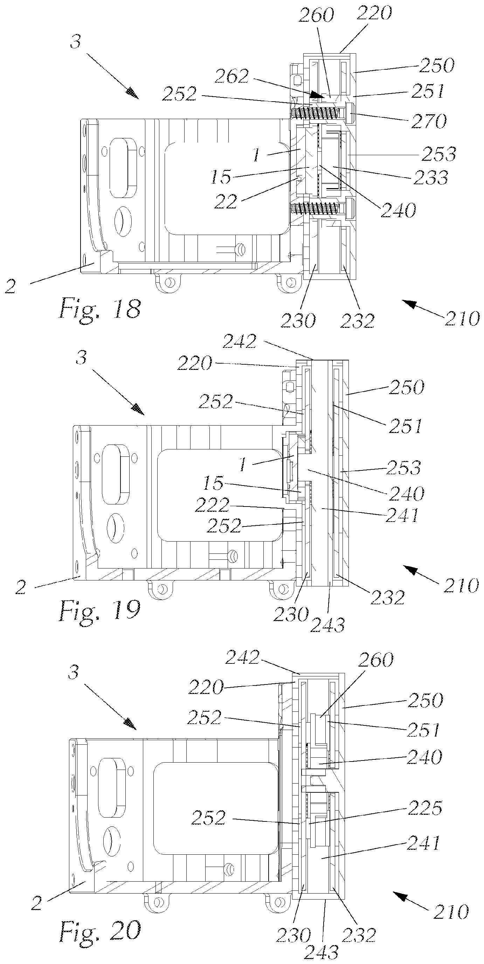

Der vierte Abstandshalter 225 (Fig. 20) ist nur im zweiten Ausführungsbeispiel angeordnet und wird später weiter erläutert.

Fünfte Abstandshalter 152 (252) sind zwischen den zweiten Abstandshaltern 151 (251) und der Gehäuseschale 120 (220) angeordnet. Die ersten Abstandshalter 160 (260) sind auf der Außenfläche der fünften Abstandshalter 152 (252) angeordnet. Die fünften Abstandshalter 152 (252) bilden ein gemeinsames Bauteil mit dem Gehäusedeckel 150 (250) und weisen jeweils eine hohlzylindrische Form auf. Die Verbindungselemente 170 (270) verlaufen durch die jeweils hohlzylindrische Form, wobei die Achse der Verbindungselemente 170 (270) mit der Achse der fünften Abstandshalter 152 (252) zusammenfällt.

Sechste Abstandshalter (253) sind zwischen Gehäusedeckel 150 (250) und zweiter Leiterplatte 132 (232) angeordnet, bilden ein gemeinsames Bauteil mit dem Gehäusedeckel 150 (250) und weisen jeweils eine hohlzylindrische Form auf. Die Verbindungselemente 170 (270) verlaufen jeweils durch die hohlzylindrische Form, wobei die Achse der Verbindungselemente 170 (270) mit der Achse der sechsten Abstandshalter (253) zusammenfällt.

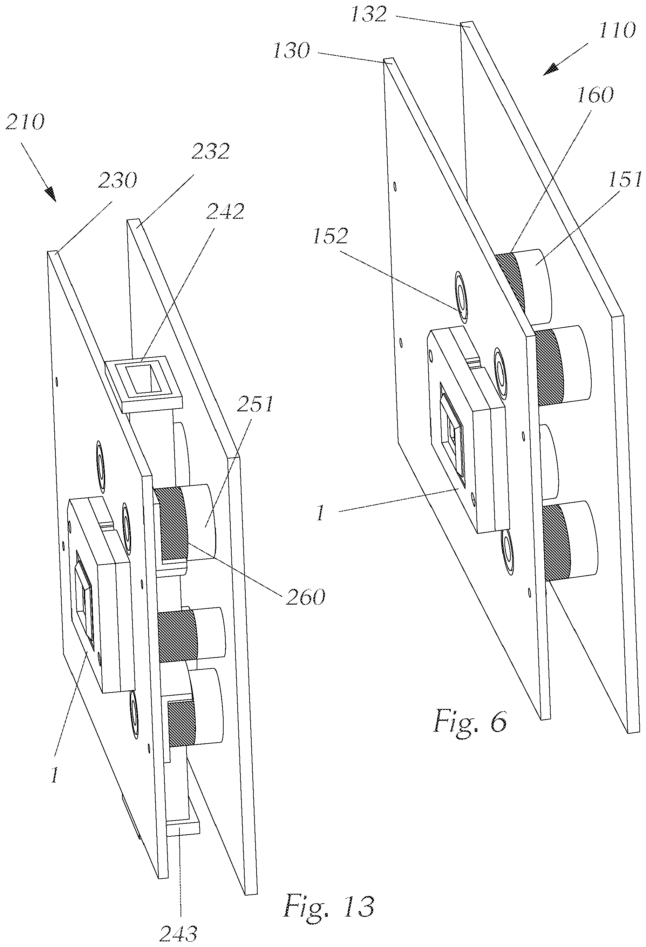

**Fig. 6** zeigt die beiden Leiterplatten 130 (230) und 132 (232) und die dazwischen angeordneten Abstandshalter 160 (260) und 151 (251) in perspektivischer Ansicht. Die ersten Abstandshalter 160 (260) sind auf der Außenfläche der fünften Abstandshalter 152 (252) angeordnet, wobei die fünften Abstandshalter 152 (252) eine größere Länge aufweisen als die ersten Abstandshalter 160 (260) und durch die Leiterplatte 130 (230) durchgeführt sind.

**Fig. 7** zeigt eine Ansicht von hinten der Gehäuseschale 120, sowie der eingelegten Leiterplatte 130 und den ersten Abstandshaltern 160. Die Kühlkörperöffnung 131 in der ersten Leiterplatte 130 ist erkennbar, wodurch Zugang zur thermischen Wirkfläche 12 des elektronischen Bauteils 1 möglich ist und hier lediglich dem Zweck einer besseren Wärmeabstrahlung vom elektronischen Bauteil 1 dient, da kein Kühlkörper eingesetzt ist.

**Fig. 8** stellt eine perspektivische Ansicht von vorne des geschlossenen Bauteilgehäuses 110 (210) zur Montage auf einer Halterung 2 dar. Erkennbar ist eine Halterungsöffnung 21 für den Zugang zur optischen Wirkfläche 11 des elektronischen Bauteils 1, sowie ein Justierstift 22 zur Ausrichtung mit einer Justieröffnung 14 des elektronischen Bauteils 1. **Fig. 9** zeigt die zusammengebaute Anordnung aus Fig. 8, wobei die Verbindungselemente 170 (270) den Gehäusedeckel 150 (250) mit der Gehäuseschale 120 (220) fest verbinden, und zusätzlich die Halterung 2 mit der Gehäuseschale 120 (220) fest verbinden.

Die in diesem Beispiel genannte Anordnung ist deshalb günstig, da dadurch die einzelnen Komponenten sowohl miteinander befestigt und in Position gehalten werden, als auch aufgabengemäß die mechanischen Belastungskräfte geeignet gedämpft werden.

In einer Halterung 2 ist das elektronische Bauteil 1 im Brennpunkt einer nachfolgenden Abbildungsoptik (hier nicht dargestellt) montiert. Dazu umfasst die Halterung 2 eine Halterungsöffnung 21, wodurch Zugang zur optischen Wirkfläche 11 des elektronischen Bauteils 1 möglich ist.

Die Außenseite der Gehäuseschale 120 (220) weist im Montagebereich Abstandsbügel 122 (222) auf (siehe Fig. 3), wobei die optische Wirkfläche 11 des in die Bauteilöffnung 121 (221) eingesetzten elektronischen Bauteils 1, d.h. der "Sichtbereich", nicht beeinträchtigt ist. Die Gehäuseschale 120 (220) ist mit der Halterung 2 festgelegt, wobei die Abstandsbügel 122 (222) durch eine Ausnehmung 23 in der Halterung 2 frei liegen.

Die Halterung 2 weist Justierstifte 22 zur Ausrichtung mit dem elektronischen Bauteil 1, und das elektronischen Bauteil 1 zumindest korrespondierende Justieröffnungen 14 auf.

Die Verbindungselemente 170 (270) sind in diesem Ausführungsbeispiel Schrauben, die lösbar und wiederverwendbar sind. Diese Verbindungform erleichtert die Wartung des Bauteilgehäuses, alternativ sind steckbare, klemmbare oder klebbare Verbindungselemente möglich.

**Fig. 10** bis **Fig. 14** stellen ein weiteres Ausführungsbeispiel des Bauteilgehäuses 210 mit dessen inneren Aufbau dar, wobei eine Kühlvorrichtung zum Anschluss an eine extern angeordnete Kühleinheit vorsehen ist. Die Figuren zeigen einen Kühlkörper 240, der auf der thermischen Wirkfläche 12 des mit der ersten Leiterplatte 230 verbundenen elektronischen Bauteils 1 nach Fig. 2 angeordnet ist. Die erste Leiterplatte 230 umfasst eine Kühlkörperöffnung 231, durch welche ein Zugang zur thermischen Wirkfläche 12 des elektronischen Bauteils 1 möglich ist. Ansonsten gilt gleiches gemäß den Ausführungen in Fig. 3 bis Fig. 9.

Der Kühlkörper 240 ist in eine Kühlleitung 241 mit einem Einlass 242 und einem Auslass 243 eingefügt und von einem Kühlmedium durchströmbar, und die Gehäuseschale 220 weist eine Einlassöffnung 223 und eine Auslassöffnung 224 auf, wobei in der Einlassöffnung 223 der Einlass 242 und in der Auslassöffnung 224 der Auslass 243 der Kühlleitung 241 angeordnet ist.

Die Einlassöffnung 223 beziehungsweise die Auslassöffnung 224 am Bauteilgehäuse 210 dient zur Verbindung mit einer externen Kühleinheit, vorzugsweise ein Lüfter (hier nicht dargestellt). Bei Flüssigkeiten als Kühlmedium kommt eine Pumpe zum Einsatz.

Je nach Kühlungsbedarf, der sich an der Verlustleistungsabgabe des elektronischen Bauteils 1 orientiert, können verschiedene Kühlmedien eingesetzt werden, beispielsweise Luft, vorzugsweise Umgebungsluft, oder eine Flüssigkeit, vorzugsweise Wasser oder Öl. Die Flüssigkeit kann zusätzlich beispielsweise Frostschutz-Additive enthalten.

Das Ausführungsbeispiel in Fig. **10** entspricht dem Ausführungsbeispiel in Fig. 3, wobei zusätzlich ein Kühlkörper vorgesehen ist. In Fig. 10 ist im Bauteilgehäuse 210 der Einlass 242 der Kühlleitung 241 erkennbar. In **Fig. 11** ist im Bauteilgehäuse 210 der Einlass 242 der Kühlleitung 241 erkennbar.

**Fig. 12** zeigt im Ausführungsbeispiel des Bauteilgehäuses mit Kühlung den Einlass 242 der Kühlleitung 241, der in der Einlassöffnung 223 der Gehäuseschale 220 angeordnet ist. Auf dem Kühlkörper 240 sind mehrere Auflagepunkte 262 definiert, auf denen die federnd ausgeführten ersten Abstandshalter 260 aufliegen.

**Fig. 13** zeigt die erste Leiterplatte 230 mit dem elektronischen Bauteil 1, die über federnd ausgeführte und hohlzylindrische erste Abstandshalter 260 mit der zweiten Leiterplatte 232 mittels der Verbindungselemente 270 mechanisch verbindbar ist. Der Auslass 243 der Kühlleitung 241, der in der Auslassöffnung 224 der Gehäuseschale 220 angeordnet ist, ist erkennbar.

**Fig. 14** zeigt die Rückansicht des Bauteilgehäuses 210 mit Gehäuseschale 220, eingelegter Leiterplatte 230 und den ersten Abstandshaltern 260. In die Leiterplatte 230 ist ein Kühlkörper 240 eingesetzt, der mit einer Kühlleitung 241 ein gemeinsames Bauteil bildet, wobei die Kühlleitung 241 einen Einlass 242 und einen Auslass 243 umfasst. Einlass 242 ist durch die Einlassöffnung 223 der Gehäuseschale 220 durchgeführt, Auslass 243 durch die Auslassöffnung 224 der Gehäuseschale 220 durchgeführt. Der Kühlkörper 240 ist auf der thermischen Wirkfläche 12 des elektronischen Bauteils 1 angeordnet. Die Auflagepunkte 262 liegen auf dem Kühlkörper 240.

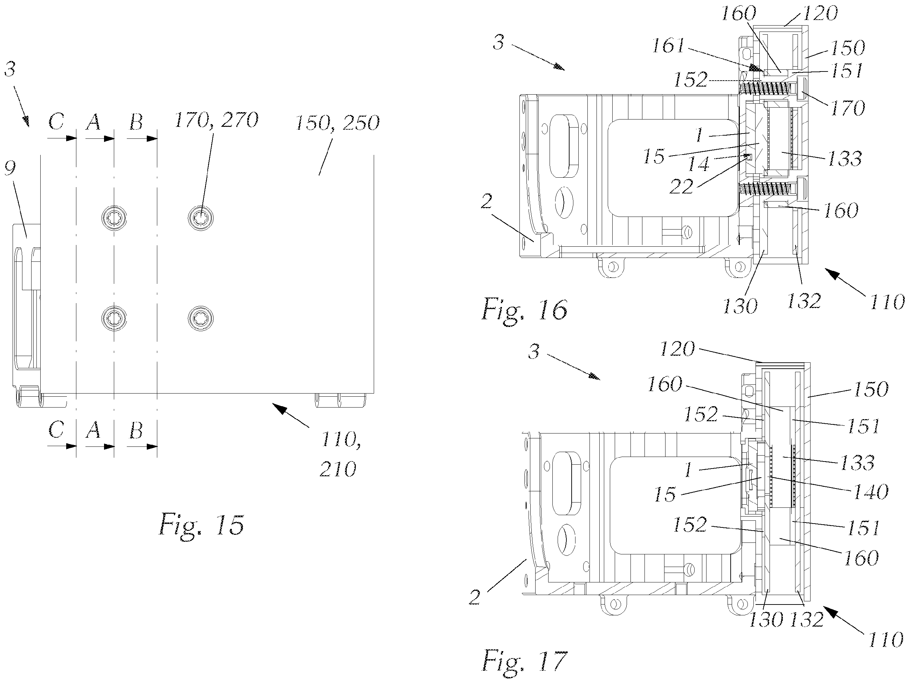

**Fig. 15** illustriert die Lage von Schnittebenen A-A, B-B und C-C durch das Bauteilgehäuse 110 des ersten Ausführungsbeispiels, als auch des Bauteilgehäuse 210 des zweiten Ausführungsbeispiels. Die Schnittebene A-A verläuft durch die Verbindungselemente 170, 270. Die Schnittebene B-B verläuft durch das elektronische Bauteil 1 und die Schnittebene C-C verläuft abseits des elektronischen Bauteils 1 durch das Bauteilgehäuse 110, 210.

In **Fig. 16** ist der innere Aufbau des Bauteilgehäuses 110 gemäß der Schnittebene A-A nach Fig. 15 veranschaulicht. Hier ist insbesondere die Erstreckung der zweiten Abstandshalter 151 und der fünften Abstandshalter 152 ersichtlich, sowie die Anordnung der ersten Abstandshalter 160 auf der Außenfläche der fünften Abstandshalter 152 und die Lage der Auflagepunkte 161.

Die Justierstifte 22 mit ihren korrespondierenden Justieröffnungen 14 sind erkennbar, sowie die Schraubverbindungen durch die Verbindungselemente 170, die Leiterplatten 130, 132 und die Abstandshalter 160, 260, 151, 152. Es ist klar, dass zur Durchführung der Verbindungselemente durch Abstandshalter, Leiterplatten, Kühlkörper und Gehäusekomponenten jeweils entsprechende Öffnungen vorgesehen sind.

Der innere Aufbau des Bauteilgehäuses 110 gemäß der Schnittebene B-B nach Fig. 15 ist in **Fig. 17** veranschaulicht.

In **Fig. 18** ist der innere Aufbau des Bauteilgehäuses 210 gemäß der Schnittebene A-A nach Fig. 15 veranschaulicht, wobei das Beispiel einen Kühlkörper 240 umfasst, der auf der thermischen Wirkfläche 12 des elektronischen Bauteils 1 angeordnet ist und eine externe Kühleinheit (nicht dargestellt) für eine aktive Kühlung, beispielsweise durch einen Lüfter, sorgen kann.

In **Fig. 19** ist der innere Aufbau des Bauteilgehäuses 210 gemäß der Schnittebene B-B nach Fig. 15 veranschaulicht, der durch das elektronische Bauteil 1 und den Kühlkörper 240 mit der Kühlleitung 241 verläuft, wobei die sechsten Abstandshalter 253 dargestellt sind, die ein gemeinsames Bauteil mit dem Gehäusedeckel 250 bilden und dazu dienen, einen Abstand zwischen der zweiten Leiterplatte 232 und dem Gehäusedeckel zu bilden. Optional können die sechsten Abstandshalter 253 hohlzylindrisch ausgeführt sein, sodass die Verbindungselemente 270 durch die sechsten Abstandshalter 253 durchgeführt sind, wobei jeweils die Achsen der sechsten Abstandshalter 253 entlang oder parallel der Linie 200 angeordnet sein können.

Sechste Abstandshalter 253 sind zwischen Gehäusedeckel 250 und zweiter Leiterplatte 232 angeordnet, bilden ein gemeinsames Bauteil mit dem Gehäusedeckel 250 und weisen jeweils eine hohlzylindrische Form auf. Die Verbindungselemente 270 verlaufen jeweils durch die hohlzylindrische Form, wobei die Achse der Verbindungselemente 270 mit der Achse der sechsten Abstandshalter 253 zusammenfällt.

In **Fig. 20** ist der innere Aufbau des Bauteilgehäuses 210 gemäß der Schnittebene C-C nach Fig. 15 veranschaulicht, wobei die vierten Abstandshalter 225 zwischen dem Kühlkörper 240 und der erster Leiterplatte 230 angeordnet sind. Die vierten Abstandshalter 225 weisen jeweils eine hohlzylindrische Form auf. Die Verbindungselemente 270 verlaufen jeweils durch die hohlzylindrische Form, wobei die Achse der Verbindungselemente 270 mit der Achse der vierten Abstandshalter 225 zusammenfällt.

Werden die vierten Abstandshalter 225 federnd ausgeführt, so kann die Wirkung von mechanischen Belastungen reduziert werden, die auf den Kühlkörper 240 beispielsweise in Form von Vibrationen einwirken.

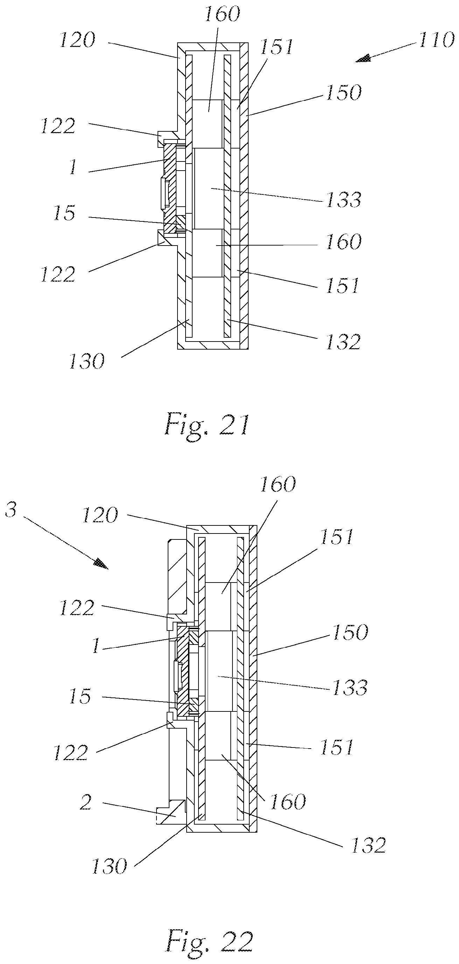

In **Fig. 21** und **Fig. 22** ist die Funktion bei der Montage des erfindungsgemäßen Bauteilgehäuses 110 dargestellt. Die gilt sinngemäß für beide vorgenannten Ausführungsbeispiele.

In **Fig. 21** ist das zusammengebaute Bauteilgehäuse 110 (210) gezeigt. Die federnden ersten Abstandshalter 160 (260) drücken die erste Leiterplatte 130 (230) an die Gehäuseschale 120 (220). Das elektronische Bauteil 1 liegt an den zwei Abstandsbügeln 122 (222) an.

Wird das Bauteilgehäuse 110 (210) an die Halterung 2 montiert, so ist unter Zuhilfenahme der vorhergehenden Figuren, sowie der **Fig. 22** erkennbar, dass das elektronische Bauteil 1 durch die Halterung im Bereich der Halterungsöffnung 21 in das Bauteilgehäuse 110 (210) hineingedrückt ist. Der erste Abstandshalter 160 (260) wird komprimiert und die erste Leiterplatte 130 (230) wird von der Gehäuseschalte 120 (22) in Abstand gehalten, wobei durch die Federspannung des Materials des ersten Abstandshalters 160 (260) eine Gegenkraft ausgeübt wird. Die zweite Leiterplatte 132 (232) ist über den Adapter sowohl elektrisch als auch mechanisch mit der ersten Leiterplatte gekoppelt und wird mit der ersten Leiterplatte 130 (230) parallel verschoben.

Die Justieröffnung 14 des elektronischen Bauteils 1 kann den Justierstift 22 der Halterung 2 aufnehmen, wie unter Zuhilfenahme der vorhergehenden Figuren erkennbar, und die Abstandsbügel 122 (222) reichen durch die Ausnehmungen 23 der Halterung 2 hindurch. Das elektronische Bauteil 1 liegt jetzt nicht mehr an den Abstandsbügeln 122 (222) an.

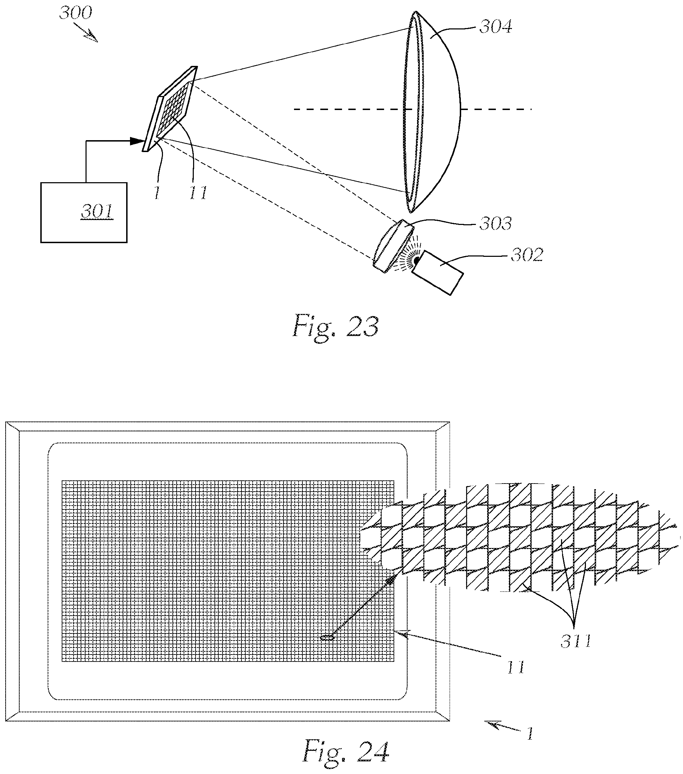

**Fig. 23** zeigt einen Fahrzeugscheinwerfer 300, der das elektronische Bauteil 1, eine elektronische Steuerung 301, eine Lichtquelle 302, eine Primäroptik 303 und eine Projektionsoptik 304 umfasst. Die gezeigte Anordnung ist mit Hilfe der erfindungsgemäßen Bauteilgehäusen 110 oder 210 gemäß der vorhergehenden Figuren innerhalb eines Scheinwerfergehäuses (nicht dargestellt) befestigt.

**Fig. 24** zeigt vergrößert das elektronische Bauteil 1, das die optische Wirkfläche 11 aufweist, die aus einer Vielzahl von Mikrospiegeln 311 gebildet ist.

Das elektronische Bauteil 1 weist die optische Wirkfläche 11 auf. Die Lichtquelle 302 kann zusammen mit der Primäroptik 303 einen Lichtstrahl erzeugen, der auf das elektronische Bauteil 1 gerichtet ist. Die elektronische Steuerung 301 steuert durch elektrische Signale das elektronische Bauteil 1 derart an, dass die Mikrospiegel 311 im elektronischen Bauteil 1 entsprechend einer gewünschten Lichtverteilung, die durch den Fahrzeugscheinwerfer 1 abgestrahlt werden soll, den Lichtstrahl zumindest teilweise in Richtung der Projektionsoptik 304 reflektieren und dadurch in eingebautem Zustand vor dem Fahrzeug ein Lichtbild gemäß der gewünschten Lichtverteilung ausgebildet werden kann.

Folgende Bezugszeichen werden im Weiteren verwendet:
- 1: Elektronisches Bauteil
- 11: Optische Wirkfläche des elektronischen Bauteils
- 12: Thermische Wirkfläche des elektronischen Bauteils
- 13: Elektrische Kontakte des elektronischen Bauteils
- 14: Justieröffnung des elektronischen Bauteils
- 15: Montagesockel für elektronisches Bauteil
- 2: Halterung
- 21: Halterungsöffnung für elektronisches Bauteil in Halterung
- 22: Justierstift der Halterung
- 23: Ausnehmung in der Halterung
- 3: Gehäusesystem
- 100, 200: Linie durch Montageachse
- 110, 210: Bauteilgehäuse
- 120, 220: Gehäuseschale
- 121, 221: Bauteilöffnung in Gehäuseschale
- 122, 222: Abstandsbügel
- 223: Einlassöffnung in Gehäuseschale
- 224: Auslassöffnung in Gehäuseschale
- 225: Vierter Abstandshalter
- 130, 230: Erste Leiterplatte
- 131, 231: Kühlkörperöffnung in erster Leiterplatte
- 132, 232: Zweite Leiterplatte
- 133, 233: Adapter zwischen erster und zweiter Leiterplatte
- 240: Kühlkörper
- 241: Kühlleitung
- 242: Einlass der Kühlleitung
- 243: Auslass der Kühlleitung
- 150, 250: Gehäusedeckel
- 151, 251: Zweiter Abstandshalter
- 152, 252: Fünfter Abstandshalter
- 253: Sechster Abstandshalter
- 160, 260: Erster Abstandshalter (federnd, elastisch deformierbar)
- 161: Auflagepunkt des Abstandhalters auf Leiterplatte
- 262: Auflagepunkt des Abstandhalters auf Kühlkörper
- 170, 270: Verbindungselement
- 300: Fahrzeugscheinwerfer
- 301: elektronische Steuerung
- 302: Lichtquelle
- 303: Primäroptik
- 304: Projektionsoptik
- 311: Mikrospiegel

## Patentansprüche

1. Fahrzeugscheinwerfer (300), umfassend
- zumindest eine Lichtquelle (302),
- zumindest eine Projektionsoptik (304),
- ein elektronisches Bauteil (1) mit einer optischen Wirkfläche (11) an einer Vorderseite und einer thermischen Wirkfläche (12) sowie elektrischen Kontakten (13) auf einer, der Vorderseite abgewandten Rückseite,
wobei die Lichtquelle (302) eingerichtet ist, einen Lichtstrahl zu erzeugen, der auf die optische Wirkfläche (11) gerichtet ist und dort in Richtung der zumindest einen Projektionsoptik (304) reflektiert wird und ein Lichtbild vor dem Fahrzeug ausbildet, wenn der Fahrzeugscheinwerfer in einem Fahrzeug installiert ist, **dadurch gekennzeichnet, dass** ferner ein Bauteilgehäuse (110, 210), welches aus einer Gehäuseschale (120, 220) und einem Gehäusedeckel (150, 250) gebildet ist, eine erste Leiterplatte (130, 230) und zumindest ein erster Abstandshalter (160, 260) beinhaltet sind, und das Bauteilgehäuse (110, 210) zumindest teilweise das elektronische Bauteil (1) aufnimmt, wobei:
- die Gehäuseschale (120, 220) eine Montageposition für das elektronische Bauteil (1), sowie eine im Bereich der Montageposition befindliche Bauteilöffnung (121, 221), in der das elektronische Bauteil (1) angeordnet ist und durch die ein Zugang zur optischen Wirkfläche (11) des elektronischen Bauteils (1) möglich ist, umfasst,
- das elektronische Bauteil (1) über dessen elektrischen Kontakte mit der ersten Leiterplatte (130, 230) verbindbar ist,
- die Gehäuseschale (120, 220) mit dem Gehäusedeckel (150, 250) verschließbar ist,
- der zumindest eine erste Abstandshalter (160, 260) zwischen einem zugeordneten Auflagepunkt (161, 262) und dem Gehäusedeckel (150, 250) angeordnet ist, wobei der Auflagepunkt (161, 262) auf der ersten Leiterplatte (130, 230) oder auf einem Kühlkörper (240), der auf der ersten Leiterplatte (130, 230) sowie auf der thermischen Wirkfläche (12) des elektronischen Bauteils (1) angeordnet ist, liegt,
wobei zumindest ein Verbindungselement (170, 270) zum Herstellen einer Verbindung zwischen dem Gehäusedeckel (150, 250) und der Gehäuseschale (120, 220) vorgesehen ist, das vorzugsweise entlang einer Achse einsetzbar ist, die quer zur ersten Leiterplatte (130, 230) verlaufend angeordnet ist.

2. Fahrzeugscheinwerfer (300) nach Anspruch 1, **dadurch gekennzeichnet, dass** die erste Leiterplatte (130, 230) eine Kühlkörperöffnung (131, 231) umfasst, durch welche ein Zugang zur thermischen Wirkfläche (12) des elektronischen Bauteils (1) möglich ist.

3. Fahrzeugscheinwerfer (300) nach Anspruch 1 oder 2, **dadurch gekennzeichnet, dass** zumindest der erste Abstandshalter (160, 260) federnd ausgeführt ist und vorzugsweise eine im Wesentlichen hohlzylindrische Form aufweist, wobei das Verbindungselement (170, 270) vorzugsweise durch die hohlzylindrische Form verläuft und vorzugsweise die Achse des Verbindungselements (170, 270) mit der Achse des ersten Abstandshalters (160, 260) zusammenfällt.

4. Fahrzeugscheinwerfer (300) nach einem der Ansprüche 1 bis 3, **dadurch gekennzeichnet, dass** zwischen der ersten Leiterplatte (130, 230) und dem Gehäusedeckel (150, 250) zumindest eine zweite Leiterplatte (132, 232) angeordnet ist sowie zumindest ein Adapter (133, 233), der vorzugsweise eine flexible Leiterplatte umfasst und der die Leiterplatten (130, 132, 230, 232) verbindet.

5. Fahrzeugscheinwerfer (300) nach einem der Ansprüche 1 bis 4, **dadurch gekennzeichnet, dass** zwischen der ersten Leiterplatte (130, 230) und dem elektronischem Bauteil (1) ein Montagesockel (15) angeordnet ist, wodurch die elektrischen Kontakte (13) des elektronischen Bauteils (1) mit der ersten Leiterplatte (130, 230) verbunden sind.

6. Fahrzeugscheinwerfer (300) nach einem der Ansprüche 1 bis 5, **dadurch gekennzeichnet, dass** zumindest ein zweiter Abstandshalter (151, 251) zwischen dem Gehäusedeckel (150, 250) und dem ersten Abstandshalter (160, 260) eingefügt ist, wobei der zweite Abstandshalter (151, 251) vorzugsweise ein gemeinsames Bauteil mit dem Gehäusedeckel (150, 250) bildet und vorzugsweise eine im Wesentlichen hohlzylindrische Form aufweist, wobei das Verbindungselement (170, 270) vorzugsweise durch die hohlzylindrische Form verläuft und vorzugsweise die Achse des Verbindungselements (170, 270) mit der Achse des zweiten Abstandshalters (151, 251) zusammenfällt.

7. Fahrzeugscheinwerfer (300) nach einem der Ansprüche 1 bis 6, **dadurch gekennzeichnet, dass** zumindest ein dritter Abstandshalter zwischen der Gehäuseschale (120, 220) und der ersten Leiterplatte (130, 230) angeordnet ist, wobei der dritte Abstandshalter vorzugsweise ein gemeinsames Bauteil mit der Gehäuseschale (120, 220) bildet und vorzugsweise eine im Wesentlichen hohlzylindrische Form aufweist, wobei das Verbindungselement (170, 270) vorzugsweise durch die hohlzylindrische Form verläuft und vorzugsweise die Achse des Verbindungselements (170, 270) mit der Achse des dritten Abstandshalters zusammenfällt.

8. Fahrzeugscheinwerfer (300) nach einem der Ansprüche 1 bis 7, **dadurch gekennzeichnet, dass** zumindest ein vierter Abstandshalter (225) zwischen dem Kühlkörper (240) und der ersten Leiterplatte (130, 230) angeordnet ist, wobei der vierte Abstandshalter (225) vorzugsweise federnd ausgeführt ist und vorzugsweise eine im Wesentlichen hohlzylindrische Form aufweist, wobei das Verbindungselement (170, 270) vorzugsweise durch die hohlzylindrische Form verläuft und vorzugsweise die Achse des Verbindungselements (170, 270) mit der Achse des vierten Abstandshalters (225) zusammenfällt.

9. Fahrzeugscheinwerfer (300) nach einem der Ansprüche 6 bis 8, **dadurch gekennzeichnet, dass** zumindest ein fünfter Abstandshalter (152, 252) zwischen einem zweiten Abstandshalter (151, 251) und der Gehäuseschale (120, 220) angeordnet ist, wobei der erste Abstandshalter (160, 260) vorzugsweise auf der Außenfläche des fünften Abstandshalters (152, 252) angeordnet ist und der fünfte Abstandshalter (152, 252) vorzugsweise ein gemeinsames Bauteil mit dem Gehäusedeckel (150, 250) bildet und vorzugsweise eine im Wesentlichen hohlzylindrische Form aufweist, wobei das Verbindungselement (170, 270) vorzugsweise durch die hohlzylindrische Form verläuft und vorzugsweise die Achse des Verbindungselements (170, 270) mit der Achse des fünften Abstandshalters (152, 252) zusammenfällt.

10. Fahrzeugscheinwerfer (300) nach einem der Ansprüche 4 bis 9, **dadurch gekennzeichnet, dass** zumindest ein sechster Abstandshalter (253) zwischen dem Gehäusedeckel (150, 250) und zweiter Leiterplatte (132, 232) angeordnet ist, wobei der sechste Abstandshalter (253) vorzugsweise ein gemeinsames Bauteil mit dem Gehäusedeckel (150, 250) bildet und vorzugsweise eine im Wesentlichen hohlzylindrische Form aufweist, wobei das Verbindungselement (170, 270) vorzugsweise durch die hohlzylindrische Form verläuft und vorzugsweise die Achse des Verbindungselements (170, 270) mit der Achse des sechsten Abstandshalters (253) zusammenfällt.

11. Fahrzeugscheinwerfer (300) nach einem der Ansprüche 1 bis 10, **dadurch gekennzeichnet, dass** der Kühlkörper (240) in eine Kühlleitung (241) mit einem Einlass (242) und einem Auslass (243) eingefügt ist und von einem Kühlmedium durchströmbar ist, und die Gehäuseschale (220) vorzugsweise eine Einlassöffnung (223) und eine Auslassöffnung (224) aufweist, wobei in der Einlassöffnung (223) der Einlass (242) und in der Auslassöffnung (224) der Auslass (243) der Kühlleitung (241) angeordnet ist.

12. Fahrzeugscheinwerfer (300) nach einem der Ansprüche 1 bis 11, **dadurch gekennzeichnet, dass** im Montagebereich auf der Außenseite der Gehäuseschale (120, 220) zumindest ein Abstandsbügel (122, 222) umfasst ist, der den Zugang zur optische Wirkfläche (11) des in die Bauteilöffnung (121, 221) eingesetzten elektronischen Bauteils (1) ermöglicht.

13. Fahrzeugscheinwerfer (300) nach einem der Ansprüche 1 bis 12, **dadurch gekennzeichnet, dass** das elektronische Bauteil (1) ein Analoges oder Digitales Mikrospiegel-Array ist.

14. Fahrzeugscheinwerfer (300), nach einem der Ansprüche 1 bis 13, **dadurch gekennzeichnet, dass** ferner eine Halterung (2) umfasst ist, wobei die Halterung (2) mit der Gehäuseschale (120, 220) zumindest durch das Verbindungselement (170, 270) verbindbar ist, wobei vorzugsweise die Gehäuseschale (120, 220) mit der Halterung (2) derart verbunden ist, dass durch eine Ausnehmung (23) in der Halterung (2) der Abstandsbügel (122, 222) frei liegt, und wobei vorzugsweise das elektronischen Bauteil (1) zumindest eine korrespondierende Justieröffnung (14) aufweist und die Halterung (2) zumindest einen Justierstift (22) zur Ausrichtung mit der Justieröffnung (14) des elektronischen Bauteils (1) aufweist.

15. Fahrzeugscheinwerfer (300) nach Anspruch 14, **dadurch gekennzeichnet, dass** die Halterung (2) eine Halterungsöffnung (21) umfasst, wobei durch die Halterungsöffnung (21) Zugang zur optischen Wirkfläche (11) des elektronischen Bauteils (1) möglich ist.

## Claims

1. A vehicle headlight (300) comprising
- at least one light source (302),
- at least one projection optical system (304),
- an electronic component (1) with an active optical surface (11) on a front face and an active thermal surface (12) and electrical contacts (13) on a rear face remote from the front face,
wherein the light source (302) is designed to generate a light beam which is oriented toward the active optical surface (11) and is reflected there in the direction of the at least one projection optical system (304) and forms a light pattern in front of the vehicle when the vehicle headlight is installed in a vehicle,
**characterised in that** a component housing (110, 210), which is formed from a housing shell (120, 220) and a housing cover (150, 250), a first printed circuit board (130, 230) and at least one first spacer (160, 260) are also contained
and the component housing (110, 210) at least partially receives the electronic component (1), wherein:
- the housing shell (120, 220) comprises a mounting position for the electronic component (1) and a component opening (121, 221) which is located in the region of the mounting position, the electronic component (1) being arranged therein and access being possible through said component opening to the active optical surface (11) of the electronic component (1),
- the electronic component (1) is able to be connected via the electrical contacts thereof to the first printed circuit board (130, 230),
- the housing shell (120, 220) is able to be closed by the housing cover (150, 250),
- the at least one first spacer (160, 260) is arranged between an assigned bearing point (161, 262) and the housing cover (150, 250), wherein the bearing point (161, 262) is located on the first printed circuit board (130, 230) or on a heat sink (240), which is arranged on the first printed circuit board (130, 230) and on the active thermal surface (12) of the electronic component (1),
wherein at least one connecting element (170, 270) is provided for producing a connection between the housing cover (150, 250) and the housing shell (120, 220), said connecting element preferably being able to be inserted along an axis which is arranged so as to run transversely to the first printed circuit board (130, 230).

2. The vehicle headlight (300) according to Claim 1, **characterised in that** the first printed circuit board (130, 230) comprises a heat sink opening (131, 231), access to the active thermal surface (12) of the electronic component (1) being possible through said heat sink opening.

3. The vehicle headlight (300) according to Claim 1 or 2, **characterised in that** at least the first spacer (160, 260) is designed to be resilient and preferably has a substantially hollow-cylindrical shape, wherein the connecting element (170, 270) preferably runs through the hollow-cylindrical shape and the axis of the connecting element (170, 270) preferably coincides with the axis of the first spacer (160, 260).

4. The vehicle headlight (300) according to one of Claims 1 to 3, **characterised in that** at least one second printed circuit board (132, 232) is arranged between the first printed circuit board (130, 230) and the housing cover (150, 250), as well as at least one adapter (133, 233) which preferably comprises a flexible printed circuit board and which connects the printed circuit boards (130, 132, 230, 232).

5. The vehicle headlight (300) according to one of Claims 1 to 4, **characterised in that** a mounting base (15) is arranged between the first printed circuit board (130, 230) and the electronic component (1), whereby the electrical contacts (13) of the electronic component (1) are connected to the first printed circuit board (130, 230).

6. The vehicle headlight (300) according to one of Claims 1 to 5, **characterised in that** at least one second spacer (151, 251) is inserted between the housing cover (150, 250) and the first spacer (160, 260), wherein the second spacer (151, 251) preferably forms a common component with the housing cover (150, 250) and preferably has a substantially hollow-cylindrical shape, wherein the connecting element (170, 270) preferably runs through the hollow-cylindrical shape and the axis of the connecting element (170, 270) preferably coincides with the axis of the second spacer (151, 251).

7. The vehicle headlight (300) according to one of Claims 1 to 6, **characterised in that** at least one third spacer is arranged between the housing shell (120, 220) and the first printed circuit board (130, 230), wherein the third spacer preferably forms a common component with the housing shell (120, 220) and preferably has a substantially hollow-cylindrical shape, wherein the connecting element (170, 270) preferably runs through the hollow-cylindrical shape and the axis of the connecting element (170, 270) preferably coincides with the axis of the third spacer.

8. The vehicle headlight (300) according to one of Claims 1 to 7, **characterised in that** at least one fourth spacer (225) is arranged between the heat sink (240) and the first printed circuit board (130, 230), wherein the fourth spacer (225) is preferably designed to be resilient and preferably has a substantially hollow-cylindrical shape, wherein the connecting element (170, 270) preferably runs through the hollow-cylindrical shape and the axis of the connecting element (170, 270) preferably coincides with the axis of the fourth spacer (225).

9. The vehicle headlight (300) according to one of Claims 6 to 8, **characterised in that** at least one fifth spacer (152, 252) is arranged between a second spacer (151, 251) and the housing shell (120, 220), wherein the first spacer (160, 260) is preferably arranged on the outer surface of the fifth spacer (152, 252) and the fifth spacer (152, 252) preferably forms a common component with the housing cover (150, 250) and preferably has a substantially hollow-cylindrical shape, wherein the connecting element (170, 270) preferably runs through the hollow-cylindrical shape and the axis of the connecting element (170, 270) preferably coincides with the axis of the fifth spacer (152, 252).

10. The vehicle headlight (300) according to one of Claims 4 to 9, **characterised in that** at least one sixth spacer (253) is arranged between the housing cover (150, 250) and the second printed circuit board (132, 232), wherein the sixth spacer (253) preferably forms a common component with the housing cover (150, 250) and preferably has a substantially hollow-cylindrical shape, wherein the connecting element (170, 270) preferably runs through the hollow-cylindrical shape and the axis of the connecting element (170, 270) preferably coincides with the axis of the sixth spacer (253).

11. The vehicle headlight (300) according to one of Claims 1 to 10, **characterised in that** the heat sink (240) is inserted into a cooling line (241) with an inlet (242) and an outlet (243), a cooling medium being able to flow through said heat sink, and the housing shell (220) preferably has an inlet opening (223) and an outlet opening (224), wherein the inlet (242) of the cooling line (241) is arranged in the inlet opening (223) and the outlet (243) of the cooling line is arranged in the outlet opening (224).

12. The vehicle headlight (300) according to one of Claims 1 to 11, **characterised in that** at least one spacer clip (122, 222) is encompassed in the mounting region on the outer face of the housing shell (120, 220), said spacer clip permitting access to the active optical surface (11) of the electronic component (1) inserted into the component opening (121, 221).

13. The vehicle headlight (300) according to one of Claims 1 to 12, **characterised in that** the electronic component (1) is an analogue or digital micro-mirror array.

14. The vehicle headlight (300) according to one of Claims 1 to 13, **characterised in that** a holder (2) is also encompassed, wherein the holder (2) is able to be connected to the housing shell (120, 220) at least by the connecting element (170, 270), wherein the housing shell (120, 220) is preferably connected to the holder (2) such that the spacer clip (122, 222) is exposed by a recess (23) in the holder (2) and wherein preferably the electronic component (1) has at least one corresponding adjustment opening (14) and the holder (2) has at least one adjustment pin (22) for alignment with the adjustment opening (14) of the electronic component (1).

15. The vehicle headlight (300) according to Claim 14, **characterised in that** the holder (2) comprises a holder opening (21), wherein access is possible to the active optical surface (11) of the electronic component (1) through the holder opening (21).

## Revendications

1. Phare de véhicule (300), comprenant :
- au moins une source lumineuse (302),
- au moins une optique de projection (304),
- un composant électronique (1) avec une surface optique active (11) sur un côté avant et une surface thermique active (12) ainsi que des contacts électriques (13) sur un côté arrière tournant le dos au côté avant,
dans lequel la source lumineuse (302) est étudiée pour générer un faisceau lumineux, lequel est dirigé sur la surface optique active (11) et y est réfléchi en direction de l'au moins une optique de projection (304) et forme une photographie devant le véhicule lorsque le phare de véhicule est installé dans un véhicule,
**caractérisé en outre en ce qu'**un boîtier de composant (110, 120), lequel est formé par une coque de boîtier (120, 220) et un couvercle de boîtier (150, 250), contient une première carte de circuit imprimé (130, 230) et au moins un premier espaceur (160, 260), et
**que** le boîtier de composant (110, 210) réceptionne au moins en partie le composant électronique (1), dans lequel :
- la coque de boîtier (120, 220) comprend une position de montage pour le composant électronique (1) ainsi qu'une ouverture de composant (121, 221), se trouvant dans la zone de la position de montage, dans laquelle le composant électronique (1) est disposé et grâce à laquelle un accès à la surface optique active (11) du composant électronique (1) est possible,
- que le composant électronique (1) peut être relié par l'intermédiaire de ses contacts électriques à la première carte de circuit imprimé (130, 230),
- que la coque de boîtier (120, 220) peut être fermée avec le couvercle de boîtier (150, 250),
- que l'au moins un espaceur (160, 260) est disposé entre un point d'appui (161, 262) associé et le couvercle de boîtier (150, 250), dans lequel le point d'appui (161, 262) se situe sur la première carte de circuit imprimé (130, 230) ou sur un dissipateur thermique (240), lequel est disposé sur la première carte de circuit imprimé (130, 230) ainsi que sur la surface thermique active (12) du composant électronique (1),
dans lequel au moins un élément de liaison (170, 270) pour établir une liaison entre le couvercle de boîtier (150, 250) et la coque de boîtier (120, 220) est prévu, lequel peut de préférence être mis en place le long d'un axe disposé de manière à s'étendre transversalement à la première carte de circuit imprimé (130, 230).

2. Phare de véhicule (300) selon la revendication 1, **caractérisé en ce que** la première carte de circuit imprimé (130, 230) comprend une ouverture de dissipateur thermique (131, 231) grâce à laquelle un accès à la surface thermique active (12) du composant électronique (1) est possible.

3. Phare de véhicule (300) selon la revendication 1 ou 2, **caractérisé en ce qu'**au moins le premier espaceur (160, 260) est réalisé de manière élastique et présente de préférence une forme sensiblement cylindrique creuse, dans lequel l'élément de liaison (170, 270) s'étend de préférence à travers la forme cylindrique creuse et l'axe de l'élément de liaison (170, 270) coïncide de préférence avec l'axe du premier espaceur (160, 260).

4. Phare de véhicule (300) selon l'une des revendications 1 à 3, **caractérisé en ce que**, entre la première carte de circuit imprimé (130, 230) et le couvercle de boîtier (150, 250), au moins une deuxième carte de circuit imprimé (132, 232) est disposée ainsi qu'au moins un adaptateur (133, 233) qui comprend de préférence une carte de circuit imprimé flexible et qui relie les cartes de circuit imprimé (130, 132, 230, 232).

5. Phare de véhicule (300) selon l'une des revendications 1 à 4, **caractérisé en ce que**, entre la première carte de circuit imprimé (130, 230) et le composant électronique (1), un socle de montage (15) est disposé, moyennant quoi les contacts électriques (13) du composant électronique (1) sont reliés à la première carte de circuit imprimé (130, 230).

6. Phare de véhicule (300) selon l'une des revendications 1 à 5, **caractérisé en ce qu'**au moins un deuxième espaceur (151, 251) est inséré entre le couvercle de boîtier (150, 250) et le premier espaceur (160, 260), dans lequel le deuxième espaceur (151, 251) forme de préférence un composant commun avec le couvercle de boîtier (150, 250) et présente de préférence une forme sensiblement cylindrique creuse, dans lequel l'élément de liaison (170, 270) s'étend de préférence à travers la forme cylindrique creuse et l'axe de l'élément de liaison (170, 270) coïncide de préférence avec l'axe du deuxième espaceur (151, 251).

7. Phare de véhicule (300) selon l'une des revendications 1 à 6, **caractérisé en ce qu'**au moins un troisième espaceur est disposé entre la coque de boîtier (120, 220) et la première carte de circuit imprimé (130, 230), dans lequel le troisième espaceur forme de préférence un composant commun avec la coque de boîtier (120, 220) et présente de préférence une forme sensiblement cylindrique creuse, dans lequel l'élément de liaison (170, 270) s'étend de préférence à travers la forme cylindrique creuse et l'axe de l'élément de liaison (170, 270) coïncide de préférence avec l'axe du troisième espaceur.

8. Phare de véhicule (300) selon l'une des revendications 1 à 7, **caractérisé en ce qu'**au moins un quatrième espaceur (225) est disposé entre le dissipateur thermique (240) et la première carte de circuit imprimé (130, 230), dans lequel le quatrième espaceur (225) est de préférence réalisé de manière élastique et présente de préférence une forme sensiblement cylindrique creuse, dans lequel l'élément de liaison (170, 270) s'étend de préférence à travers la forme cylindrique creuse et l'axe de l'élément de liaison (170, 270) coïncide de préférence avec l'axe du quatrième espaceur (225).

9. Phare de véhicule (300) selon l'une des revendications 6 à 8, **caractérisé en ce qu'**au moins un cinquième espaceur (152, 252) est disposé entre un deuxième espaceur (151, 251) et la coque de boîtier (120, 220), dans lequel le premier espaceur (160, 260) est de préférence disposé sur la surface extérieure du cinquième espaceur (152, 252) et le cinquième espaceur (152, 252) forme de préférence un composant commun avec le couvercle de boîtier (150, 250) et présente de préférence une forme sensiblement cylindrique creuse, dans lequel l'élément de liaison (170, 270) s'étend de préférence à travers la forme cylindrique creuse et l'axe de l'élément de liaison (170, 270) coïncide de préférence avec l'axe du cinquième espaceur (152, 252).

10. Phare de véhicule (300) selon l'une des revendications 4 à 9, **caractérisé en ce qu'**au moins un sixième espaceur (253) est disposé entre le couvercle de boîtier (150, 250) et la deuxième carte de circuit imprimé (132, 232), dans lequel le sixième espaceur (253) forme de préférence un composant commun avec le couvercle de boîtier (150, 250) et présente de préférence une forme sensiblement cylindrique creuse, dans lequel l'élément de liaison (170, 270) s'étend de préférence à travers la forme cylindrique creuse et l'axe de l'élément de liaison (170, 270) coïncide de préférence avec l'axe du sixième espaceur (253).

11. Phare de véhicule (300) selon l'une des revendications 1 à 10, **caractérisé en ce que** le dissipateur thermique (240) est inséré dans une conduite de refroidissement (241) avec une entrée (242) et une sortie (243) et peut être traversé par un fluide de refroidissement et que la coque de boîtier (220) présente de préférence une ouverture d'entrée (223) et une ouverture de sortie (224), dans lequel l'entrée (242) de la conduite de refroidissement (241) est disposée dans l'ouverture d'entrée (223) et la sortie (243) de celle-ci est disposée dans l'ouverture de sortie (224).

12. Phare de véhicule (300) selon l'une des revendications 1 à 11, **caractérisé en ce que**, dans la zone de montage sur le côté extérieur de la coque de boîtier (120, 220), au moins un étrier d'espacement (122, 222) est compris, lequel permet l'accès à la surface optique active (11) du composant électronique (1) mis en place dans l'ouverture de composant (121, 221).

13. Phare de véhicule (300) selon l'une des revendications 1 à 12, **caractérisé en ce que** le composant électronique (1) est un réseau de micro-miroirs analogique ou numérique.

14. Phare de véhicule (300) selon l'une des revendications 1 à 13, **caractérisé en ce qu'**une fixation (2) est en outre comprise, dans lequel la fixation (2) peut être reliée à la coque de boîtier (120, 220) au moins grâce à l'élément de liaison (170, 270), dans lequel la coque de boîtier (120, 220) est de préférence reliée à la fixation (2) de telle sorte que grâce à un évidement (23) dans la fixation (2), l'étrier d'espacement (122, 222) est exposé, et dans lequel le composant électronique (1) présente de préférence au moins une ouverture de réglage (14) correspondante et la fixation (2) présente au moins une tige de réglage (22) pour l'alignement avec l'ouverture de réglage (14) du composant électronique (1).

15. Phare de véhicule (300) selon la revendication 14, **caractérisé en ce que** la fixation (2) comprend une ouverture de fixation (21), dans lequel, grâce à l'ouverture de fixation (21), un accès à la surface optique active (11) du composant électronique (1) est possible.
